(19) **Europäisches Patentamt European Patent Office Office européen des brevets**

(11) **EP 4 556 523 A1**

(12) **EUROPEAN PATENT APPLICATION**

(43) Date of publication:
21.05.2025 Bulletin 2025/21

(21) Application number: 23210984.3

(22) Date of filing: 20.11.2023

(51) International Patent Classification (IPC):
**C08L 23/10** (2006.01)

(52) Cooperative Patent Classification (CPC):
(C-Sets available)
**C08L 23/10;** C08L 2205/02; C08L 2205/16;
C08L 2207/20 (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Borealis AG**
**1020 Vienna (AT)**

(72) Inventors:
• **JERABEK, Michael**
**4021 Linz (AT)**
• **SACCETTI, Francisco**
**4021 Linz (AT)**

(74) Representative: **Maikowski & Ninnemann Patentanwälte Partnerschaft mbB Postfach 15 09 20 10671 Berlin (DE)**

(54) **POLYOLEFIN COMPOSITION COMPRISING RECYCLED PLASTIC MATERIAL, AN ELASTOMER AND GLASS FIBERS**

(57) The present invention relates to a polyolefin composition comprising a) 20-50 wt% (based on the overall weight of the polyolefin composition) of a mixed-plastics polypropylene blend of recycled material, b) 20-50 wt% (based on the overall weight of the polyolefin composition) of glass fibers; c) 5-25 wt% (based on the overall weight of the polyolefin composition) of at least one elastomer, d) 0-50 wt% (based on the overall weight of the polyolefin composition) of at least one polypropylene homopolymer, and optionally further additives, wherein the sum of all ingredients adds always up to 100 wt%, wherein the polyolefin composition has a puncture energy of at least 8.0 J (ISO 6603-2), and an impact strength (ISO179-1, Charpy 1eA +23°C) of at least 9.5 kJ/m$^2$.

EP 4 556 523 A1

**EP 4 556 523 A1**

(52) Cooperative Patent Classification (CPC): (Cont.)

C-Sets
**C08L 23/10, C08K 7/14, C08L 23/08**

## Description

The invention relates to a polyolefin composition comprising recycled plastic material, at least one elastomer and glass fibers. The invention also relates to an article comprising the polyolefin composition.

## Description

Polyolefins, in particular polyethylene and polypropylene are increasingly consumed in large amounts in a wide range of applications, including packaging for food and other goods, fibres, automotive components, and a great variety of manufactured articles. Polyethylene based materials are a particular problem as these materials are extensively used in packaging. Taking into account the huge amount of waste collected compared to the amount of waste recycled back into the stream, there is still a great potential for intelligent reuse of plastic waste streams and for mechanical recycling of plastic wastes.

Generally, recycled quantities of polypropylene on the market are mixtures of both polypropylene (PP) and polyethylene (PE), this is especially true for post-consumer waste streams. Moreover, commercial recyclates from post-consumer waste sources are conventionally cross-contaminated with non-polyolefin materials such as polyethylene terephthalate, polyamide, polystyrene or non-polymeric substances like wood, paper, glass or aluminum. These cross-contaminations drastically limit final applications of recycling streams such that no profitable final uses remain. Polyolefinic recycling materials, especially from post-consumer waste streams, are a mixture of PE and PP. The better the quality of the recyclate is, the less available it is and the more expensive it is.

Customers that are asking for recyclates require similar stiffness-impact strength as virgin ones. This is also valid for reinforced glass fibre compounds for structural products. The quality issue in recyclates compared to the virgin ones can be to some extent overcome by reinforcing the recyclates, where the reinforcement particles physically bond the dissimilar domains (PP and PE).

Compositions comprising virgin polymers (i.e. polymers used for the first time) and recycled mixed plastics have been studied.

WO 2014167493 A1 describes a process for the preparation of a polyolefin mixture comprising the step (a) of mixing together a base polymeric mixture MB and a polymeric mixture MPR, wherein said mixture MPR is obtained from the recycling of post-consumer plastic materials.

Recycled mixed plastics reinforced with glass fibre (GF) have also been studied. For example, recycled PP or PP/PE mixtures have been reinforced with GF or a hybrid GF with other fillers.

EP 2845876 B1 describes a composition containing two or more resins and a glass fiber, comprising: a resin mixture comprising waste polyethylene (PE) and waste polypropylene (PP); a long glass fiber with a length of 10 mm or greater; and a rubber-based resin, wherein the composition comprises, based on 100 parts by weight of the resin mixture, 3-30 parts by weight of the long glass fiber, 10-50 parts by weight of the rubber-based resin, and 10-35 parts by weight of LDPE.

EP 3406662 A1 describes structurally-reinforced plastic composite products produced with recycled waste glass fibers and recycled polymer compounds and process for making the same. The reinforced composite article comprises: a recycled fiberglass collected from waste streams and functioning as a filler, the recycled fiberglass being 30-70% of a total weight of the reinforced composite article; a colorant of 1-2 % of the total weight of the reinforced composite article; and a recycled resin collected from the waste streams and substantially wetting-out the recycled glass fiber by the black colorant and a chemical binder. The recycled resin comprises at least one of high density polyethylene (HDPE), polypropylene (PP) or an engineering grade resin.

WO2018086959 A1 refers to a glass fiber filler-containing polyolefin composition and article comprising virgin homopolymers and copolymers, 5-30 wt% glass fiber filler; and a compatibilizer.

WO2019198037 A1 describes a fiber reinforced composition with good impact performance and flame retardance (SABIC). The composition comprises polycarbonate or a polycarbonate copolymer as polymer base resin, a sizing agent such as polyurethane, nylon, maleic anhydride copolymer etc, and a fiber filler (e.g. glass fibers). A molded article formed from the composition exhibits a notched Izod impact strength of 140 to 190 Joules/meter (J/m), and an unnotched impact strength of 500 to 1200 J/m when tested in accordance with ASTM D256.

Thus, there are examples of reinforced recyclates with a good tensile modulus and impact strength at the same time. However, it would be of an advantage to provide polyolefin compositions based on post-consumer recyclate (PCR) that even have better mechanical properties.

It was therefore an object of the invention to provide a polyolefin composition comprising a blend of polyolefin material recovered from waste plastic material with improved mechanical properties., in particular improved stiffness and strength as well as notched impact and instrumented puncture performance.

This object has been achieved by providing a polyolefin composition comprising:

a) 20-50 wt% (based on the overall weight of the polyolefin composition) of a mixed-plastics polypropylene blend of recycled material having

(i) a crystalline fraction (CF) content determined according to CRYSTEX QC analysis in the range from 85.0 - 95.0 wt% (based on the total weight of the mixed-plastics polypropylene), and
(ii) a soluble fraction (SF) content determined according to CRYSTEX QC analysis in the range from 5.0 - 15.0 wt% (based on the total weight of the mixed-plastics polypropylene), whereby crystalline fraction and soluble fraction add up to 100 wt.-%,
whereby
(iii) said crystalline fraction (CF) has a propylene content (C3(CF)) as determined by FT-IR spectroscopy calibrated by quantitative $^{13}$C-NMR spectroscopy, in the range from 93.0 - 99.0 wt% (based on the total weight of the crystalline fraction), and whereby
(iv) said crystalline fraction (CF) has an ethylene content (C2(CF)), as determined by FT-IR spectroscopy calibrated by quantitative $^{13}$C-NMR spectroscopy, in the range from 1.0 to 7.0 wt.-% (based on the total weight of the crystalline fraction), whereby propylene content and ethylene content add up to 100 wt.-%,; and
(v) said soluble fraction (SF) has an intrinsic viscosity (iV(SF)), as determined using an online 2-capillary viscometer, in the range from 1.0-2.0 dl/g, and
whereby
(vi) the mixed-plastics polypropylene blend has a CIELAB color space (L*a*b*) of

- L* from 30 to 97.0, in particular from 50 to 97.0;
- a* from -10.0 to 16.0, in particular from -8 to < 10.0;
- b* from -5.0 to 25.0, in particular from -2 to 22.0,

b) 20-50 wt% (based on the overall weight of the polyolefin composition) of glass fibers,
c) 5-25 wt% (based on the overall weight of the polyolefin composition) of at least one elastomer,
d) 0-50 wt% (based on the overall weight of the polyolefin composition) of at least one polypropylene homopolymer,

and optionally further additives, wherein the sum of all ingredients adds always up to 100 wt%,

wherein the polyolefin composition has

- a puncture energy of at least 8.0 J (ISO 6603-2), and

- an impact strength (ISO179-1, Charpy 1eA +23°C) of at least 9.5 kJ/m$^2$.

Accordingly, a polypropylene recyclate of high quality is mixed with an elastomer, glass fibres and optionally with a virgin polypropylene homopolymer, to obtain a polyolefin composition with excellent mechanical properties, in particular excellent puncture energy performance and impact strength, while retaining properties of the final composition comparable to virgin polymers.

The performance of the combination of the different kinds of polymers and recyclates with glass fiber reinforcement is not easily predictable. It is in particular difficult to predict stiffness and strength as well as notched impact and instrumented puncture performance due to the interaction between the various components. In addition, recyclate polyolefins are typically contaminated with polar polymers (e.g. PA, PET) or other non-POs such as PS or fillers etc., which make an obvious calculation of the final mechanical performance more difficult.

The term "virgin" denotes the newly produced materials and/or objects prior to first use and not being recycled. In case that the origin of the polymer is not explicitly mentioned the polymer is a "virgin" polymer.

For the purposes of the present description and of the subsequent claims, the term "recycled" is used to indicate that the material is recovered from post-consumer waste and/or industrial waste. Namely, post-consumer waste refers to objects having completed at least a first use cycle (or life cycle), i.e. having already served their first purpose and been through the hands of a consumer; while industrial waste refers to the manufacturing scrap which does normally not reach a consumer. In the gist of the present invention "recycled polymers" may also comprise up to 17 wt%, preferably up to 3 wt%, more preferably up to 1 wt% and even more preferably up to 0.1 wt% based on the overall weight of the recycled polymer of other components originating from the first use. Type and amount of these components influence the physical properties of the recycled polymer. The physical properties given below refer to the main component of the recycled polymer.

Mixed plastics is defined as the presence of small amounts of compounds usually not found in virgin polypropylene blends such as polystyrenes, polyamides, polyesters, wood, paper, limonene, aldehydes, ketones, fatty acids, metals, and/or long-term decomposition products of stabilizers. Virgin polypropylene blends denote blends as directly originating from the production process without intermediate use. As a matter of definition, "mixed plastics" can be equated with detectable amounts of polystyrene and/or polyamide-6 and/or limonene and/or fatty acids.

The total amount of the at least one elastomer used in the present polyolefin composition adds up according to the invention to a range between 5-25 wt%, preferably between 10-20 wt%, more preferably between 12-17 wt% (based on the overall weight of the polyolefin composition).

The amount of the mixed-plastics polypropylene blend, which is preferably recovered from a waste plastic material derived from post-consumer and/or post-industrial waste, used in the present polyolefin composition is according to the invention in a range between 20-50 wt%, preferably between 30-40 wt%, more preferably between 30-35 wt% (based on the overall weight of the polyolefin composition).

The amount of glass fibers used in the present polyolefin composition is according to the invention in a range between 20-50 wt%, preferably between 20-40 wt%, more preferably between 30-40 wt%, (based on the overall weight of the polyolefin composition).

The total amount of any virgin polypropylene homopolymer used in the present polyolefin composition may add up according to the invention to a range between 0-50 wt%, preferably between 0-40 wt%, more preferably between 0-30 wt% (based on the overall weight of the polyolefin composition).

It is to be understood that further additives may also be included in the polyolefin composition and the sum of all ingredients adds always up to 100 wt% in each of the embodiments described herein.

It is further to be understood that the polyolefin composition may be (essentially) free of any (virgin) polypropylene block copolymer. Such block copolymers comprise two or more homopolymer subunits linked by covalent bonds.

It is further to be understood that the polyolefin composition may be essentially free of any talc. This does not include any possible trace amounts of talc that may still be present in the recycled material.

Furthermore, the polyolefin composition may be (essentially) free of any heterophasic propylene copolymer. Such heterophasic propylene copolymers may comprise randomly inserted ethylene or butene as comonomer. This applies for any added virgin heterophasic polypropylene polymer, but does not include any possible trace amounts of any heterophasic polypropylene polymer that may still be present in the recycled material.

According to an embodiment the present polyolefin composition comprises

a) 30-40 wt% (based on the overall weight of the polyolefin composition) of the mixed-plastics polypropylene blend of recycled material;
b) 20-40 wt% (based on the overall weight of the polyolefin composition) of glass fibers;
c) 10-20 wt% (based on the overall weight of the polyolefin composition) of at least one elastomer,
d) 0-40 wt% (based on the overall weight of the polyolefin composition) of at least one polypropylene homopolymer, and optionally further additives, wherein the sum of all ingredients adds always up to 100 wt%.

In an embodiment, the present polyolefin composition is further characterized by a puncture energy of at least 9.0 J, preferably of at least 10.0 J, more preferably of at least 14.0 J, in particular in a range between 8.0 and 25.0 J, more in particular in a range between 10.0 and 20.0 J, even more particular in a range between 14.0 and 18.0 J.

In another embodiment, the present polyolefin composition is characterized by an impact strength (ISO179-1 , Charpy 1eA +23°C) of at least 12.0 kJ/m$^2$, preferably of at least 16.0 kJ/m$^2$, in particular in a range between 9.5 and 35.0 kJ/m$^2$, more in particular in a range between 12.0 and 30.0 kJ/m$^2$, even more particular in a range between 16.0 and 25.0 kJ/m$^2$.

In a further embodiment, the polyolefin composition has a melt flow rate MFR$_2$ (ISO 1133, 2.16 kg, 230°C) of at least 2.0 g/ 10 min, preferably at least 4.0 g/10 min, more preferably at least 4.5 g/10 min, even more preferably at least 5.0 g/ 10 min, in particular in the range between 2.0 and 12.0 g/10 min, preferably between 3.0 and 10.0 g/10min, more preferably between 4.0 and 7.0 g/10 min, even more preferably between 4.5 and 6.5 g/10min, such as

In still another embodiment, the present polyolefin composition has a tensile modulus at 23°C (ISO 527-2) of at least 3500 MPa, preferably of at least 4500 MPa, more preferably of at least 5000 MPa, in particular in a range between 3500 and 8000 MPa, more in particular in a range between 4500 and 7000 MPa.

In still another embodiment, the present polyolefin composition has a tensile strength at 23°C (50 mm/min, ISO 527-2) of at least 50 MPa, preferably of at least 55 MPa, more preferably of at least 60 MPa, in particular in a range between 50 and 100 MPa, more in particular in a range between 60 and 80 MPa.

In still another embodiment, the present polyolefin composition has a density (determined according to DIN EN ISO 1183) of at least 1000 kg/m$^3$, preferably of at least 1100 kg/m$^3$, more preferably of at least 1200 kg/m$^3$, in particular in a range between 1000 kg/m$^3$ and 1400 kg/m$^3$, more in particular in a range between 1100 kg/m$^3$ and 1300 kg/m$^3$.

In a first preferred embodiment, the present polyolefin composition comprises

a) 30-40 wt% (based on the overall weight of the polyolefin composition) of the mixed-plastics polypropylene blend of recycled material;

b) 20-40 wt% (based on the overall weight of the polyolefin composition) of glass fibers;

c) 10-20 wt% (based on the overall weight of the polyolefin composition) of at least one elastomer,

d) 5-35 wt%, preferably 15-25 wt% (based on the overall weight of the polyolefin composition) of at least one polypropylene homopolymer,

and optionally further additives, wherein the sum of all ingredients adds always up to 100 wt%.

This first polyolefin composition is preferably (essentially) free of any talc, preferably free of any (virgin) heterophasic propylene copolymer and/or preferably free of any (virgin) polypropylene block copolymer.

Said first polyolefin composition has a puncture energy of at least 9.0 J, preferably of at least 10.0 J, more preferably of at least 14.0 J, in particular in a range between 8.0 and 20.0 J, more in particular in a range between 10.0 and 18.0 J, even more particular in a range between 12.0 and 16.0 J.

Furthermore, said first polyolefin composition has an impact strength (ISO179-1, Charpy 1eA +23°C) of at least 12.0 kJ/m$^2$, preferably of at least 16.0 kJ/m$^2$, in particular in a range between 9.5 and 35.0 kJ/m$^2$, more in particular in a range between 12.0 and 30.0 kJ/m$^2$, even more particular in a range between 16.0 and 28.0 kJ/m$^2$.

In a further embodiment, said first polyolefin composition has a melt flow rate MFR$_2$ (ISO 1133, 2.16 kg, 230°C) of at least 4.5 g/10 min, preferably at least 5.0 g/10 min, more preferably at least 5.5 g/ 10 min, in particular in the range between 4.5 and 7.0 g/10 min, preferably between 5.0 and 7.0 g/10min, more preferably between 5.5 and 6.5 g/10min.

In still another embodiment, said first polyolefin composition has a tensile modulus at 23°C (ISO 527-2) of at least 3500 MPa, preferably of at least 4500 MPa, more preferably of at least 5000 MPa, in particular in a range between 3500 and 8000 MPa, more in particular in a range between 4500 and 7000 MPa.

In still another embodiment, said first polyolefin composition has a tensile strength at 23°C (50 mm/min, ISO 527-2) of at least 50 MPa, preferably of at least 55 MPa, more preferably of at least 60 MPa, in particular in a range between 50 and 100 MPa, more in particular in a range between 60 and 80 MPa.

In still another embodiment, said first polyolefin composition has a density (determined according to DIN EN ISO 1183) of at least 1000 kg/m$^3$, preferably of at least 1100 kg/m$^3$, more preferably of at least 1200 kg/m$^3$, in particular in a range between 1000 kg/m$^3$ and 1400 kg/m$^3$, more in particular in a range between 1100 kg/m$^3$ and 1300 kg/m$^3$.

In another second preferred embodiment, the present polyolefin composition comprises

a) 30-50 wt%, preferably 35 - 45 wt% (based on the overall weight of the polyolefin composition) of the mixed-plastics polypropylene blend of recycled material;

b) 30-50 wt%, preferably 35-45 wt% (based on the overall weight of the polyolefin composition) of glass fibers;

c) 10-20 wt% (based on the overall weight of the polyolefin composition) of at least one elastomer,

and optionally further additives, wherein the sum of all ingredients adds always up to 100 wt%.

It is to be understood that this second polyolefin composition is also preferably (essentially) free of any talc, preferably free of any (virgin) hetereophasic propylene copolymer, preferably free of any (virgin) polypropylene block copolymer and/or preferably free of any (virgin) polypropylene homopolymer.

Said second polyolefin composition has a puncture energy of at least 12.0 J, preferably of at least 14.0 J, more preferably of at least 16.0 J, in particular in a range between 12.0 and 25.0 J, more in particular in a range between 14.0 and 20.0 J, even more particular in a range between 14.0 and 18.0 J.

Furthermore, said second polyolefin composition has an impact strength (ISO179-1, Charpy 1eA +23°C) of at least 15.0 kJ/m$^2$, preferably of at least 20.0 kJ/m$^2$, in particular in a range between 15.0 and 35.0 kJ/m$^2$, more in particular in a range between 20.0 and 30.0 kJ/m$^2$, even more particular in a range between 25.0 and 30.0 kJ/m$^2$.

In a further embodiment, said second polyolefin composition has a melt flow rate MFR$_2$ (ISO 1133, 2.16 kg, 230°C) of at least 4.0 g/10 min, preferably at least 4.5 g/10 min, more preferably at least 4.6 g/ 10 min, in particular in the range between 4.0 and 7.0 g/10 min, preferably between 4.5 and 6.5 g/10min, more preferably between 4.6 and 6.0 g/10min.

In still another embodiment, said second polyolefin composition has a tensile modulus at 23°C (ISO 527-2) of at least 5000 MPa, preferably of at least 5500 MPa, more preferably of at least 6000 MPa, in particular in a range between 5000 and 8000 MPa, more in particular in a range between 5500 and 7000 MPa.

In still another embodiment, said second polyolefin composition and any (virgin) polypropylene homopolymer has a tensile strength at 23°C (50 mm/min, ISO 527-2) of at least 50 MPa, preferably of at least 55 MPa, more preferably of at least 60 MPa, in particular in a range between 50 and 100 MPa, more in particular in a range between 60 and 80 MPa.

In still another embodiment, said second polyolefin composition has a density (determined according to DIN EN ISO 1183) of at least 1000 kg/m$^3$, preferably of at least 1100 kg/m$^3$, more preferably of at least 1200 kg/m$^3$, in particular in a range between 1000 kg/m$^3$ and 1400 kg/m$^3$, more in particular in a range between 1100 kg/m$^3$ and 1300 kg/m$^3$.

Mixed-plastics polypropylene blend of recycled material

The mixed-plastics polypropylene blend is obtained from recycled waste stream of post-consumer plastic trash.

Several possible feedstocks from municipal trash collection systems are commercially available and allow providing post-consumer plastic trash. Depending on the participation of the consumer, the purity of those feedstocks will differ which is usually indicated by the collecting systems. It is further possible to screen the intermediate after step b) for the presence of apparently very old ('ancient') mainly colorless / natural plastic articles. Discoloration (e.g. pronounced yellowing) and/or pronounced scratches of the mainly colorless / natural plastic articles allow the sorting. Such step makes it possible to get rid of so-called substances of very high concern. Those substances such as Pb, Hg, polybrominated diphenyl ethers, and the like have been banned for quite some time but are still present in the real world as consumers tend to stockpile plastic articles e.g. in the form of plastic toys for many years and eventually throw them away into collection systems. The additional screening step can be assisted by analysis controls for said substances of very high concern.

Odor control and assessment is possible by a number of methods. An overview is provided inter alia by Demets, Ruben, et al. "Development and application of an analytical method to quantify odour removal in plastic waste recycling processes." Resources, Conservation and Recycling 161 (2020): 104907 being incorporated by reference herewith.

The mixed-plastics polypropylene blend typically has a melt flow rate (ISO1133, 2.16kg; 230°C) of 2.0 to 50 g/10min. The melt flow rate can be influenced by splitting post-consumer plastic waste streams, for example, but not limited to: originating from extended producer's responsibility schemes, like from the German DSD, or sorted out of municipal solid waste into a high number of pre-sorted fractions and recombine them in an adequate way. As a further way of modifying melt flow rate of the final mixed-plastics polypropylene blend peroxides can be introduced in the final pelletization step. Usually MFR ranges from 2.0 to 50.0 g/10min, preferably from 5.0 to 40.0 g/10min, more preferably from 10.0 to 30.0 g/10min, and most preferably from 15.0 to 25.0 g/10min. This MFR range particularly holds for the non-visbroken mixed-plastics polypropylene blend. Visbreaking allows increase of MFR to 30.0 g/10 min or 40.0 g/10 min.

Typically, the recycling nature can be assessed by the presence of one or more of the following substances:

a) polystyrene
b) polyamide-6
c) limonene as determined by using solid phase microextraction (HS-SPME-GC-MS)
d) fatty acids as determined by using solid phase microextraction (HS-SPME-GC-MS).

Presence means detectable limits. The detection limit for limonene and fatty acids in solid phase microextraction (HS-SPME-GC-MS) is below 0.1 ppm, i.e. traces of these substances easily allow figuring out recycling nature.

The following amounts are preferred

a) polystyrene: 0 to 2.0 wt%; more preferred 0 to 0.5 wt%
b) polyamide-6: 0 to 1.5 wt%; more preferred 0 to 0.5 wt%
c) limonene as determined by using solid phase microextraction (HS-SPME-GC-MS): 0.1 ppm to 50 ppm
d) fatty acids as determined by using solid phase microextraction (HS-SPME-GC-MS): 0.1 ppm to 200 ppm, more preferably 50 ppm.

It goes without saying that the amounts of a), b), c) and d) should be as low as possible. In a specifically preferred embodiment the mixed-plastics polypropylene blend is free of polystyrene and is free of polyamide meaning both polymers are below the detection limit.

Different mixed-plastics polypropylene blends may be used.

Mixed-plastics polypropylene blend (Blend A1)

In one embodiment, the mixed-plastics polypropylene blend (Blend A1) has

(i) a crystalline fraction (CF) content determined according to CRYSTEX QC analysis in the range from 86.0 to 94.0 wt%, more preferably 90.0 to 94.0 wt.%, and
(ii) a soluble fraction (SF) content determined according to CRYSTEX QC analysis in the range from 6.0 to 14.0 wt%, more preferably 6.0 to 10.0 wt%, whereby
(iii) said crystalline fraction (CF) has a propylene content (C3(CF)) as determined by FT-IR spectroscopy calibrated by quantitative $^{13}$C-NMR spectroscopy, in the range from 93.0 - 99.0 wt%, preferably from 95.0 to 98.0 wt.%; and whereby
(iv) said crystalline fraction (CF) has an ethylene content (C2(CF)), as determined by FT-IR spectroscopy calibrated by quantitative $^{13}$C-NMR spectroscopy, in the range from 1 to 7 wt%; more preferably 2.0 to 5.0 wt%, even more preferably 2.5 to 3.5 wt%; and

(v) said soluble fraction (SF) has an intrinsic viscosity (iV(SF)) in the range from 1.2 to below 1.8 dl/g, preferably 1.40 to 1.70 dl/g;

whereby

(vi) the mixed-plastics polypropylene blend has a CIELAB color space (L*a*b*) of

- L* from 40 to 85, preferably from 50 to 75;
- a* from -8.00 to 10, more preferably -5.0 to 0.0;
- b* from 0.0 to below 10.0, more preferably 0.0 to below 5.00.

The mixed-plastics polypropylene blend (Blend A1) has preferably a melt flow rate $MFR_2$ (ISO 1133, 2.16 kg, 230°C) of at least 10.0 g/10 min, preferably at least 12.0 g/10 min, more preferably at least 14.0 g/ 10 min, in particular in the range between 10.0 and 30.0 g/10 min, preferably between 12.0 and 25.0 g/10min, more preferably between 14.0 and 20.0 g/10min.

The crystalline fraction (CF) content determined according to CRYSTEX QC analysis of Blend A1 is preferably in the range from 90.0 to 94.0 wt.-% and the soluble fraction (SF) content determined according to CRYSTEX QC analysis is in the range of 6.0 to 10.0 wt.-%.

The mixed-plastics polypropylene blend (Blend A1) preferably has a soluble fraction (SF) obtained by CRYSTEX QC analysis with a content of ethylene (C2(SF)), as determined by FT-IR spectroscopy calibrated by quantitative $^{13}$C-NMR spectroscopy, in the range from 20.0 to 30.0 wt%, more preferably 20.0 to 28.0 wt%, even more preferably 22.0 to 26.0 wt% and most preferably 23.0 to 25.0 wt%.

The mixed-plastics polypropylene blend (Blend-A1) is preferably characterized by an odor (VDA270-B3) of 5.0 or lower, preferably 4.7 or lower, more preferably 4.0 or lower, such as 3.5.

In a further aspect the mixed-plastics polypropylene blend (Blend A1) has a Large Amplitude Oscillatory Shear - Non-Linear Factor (LAOS -NLF) (190°C; 1000%) higher than 2.6, whereby

$$LAOS - NLF = \left| \frac{G_1'}{G_3'} \right|$$

whereby

$G_1'$ is the first order Fourier Coefficient
$G_3'$ is the third order Fourier Coeffient

The mixed-plastics polypropylene blend (Blend-A1) has a tensile modulus (ISO 527-2 at a cross head speed of 1 mm/min; 23°C) using injection molded specimens as described in EN ISO 1873-2 (dog bone shape, 4 mm thickness) of at least 1300 MPa, preferably at least 1330 MPa, such as 1440 MPa.

The mixed-plastics polypropylene blend (Blend A1) turned out to have processability reflected by a shear thinning factor (STF) being the ratio of eta 0.05 and eta 300 of above 9.0, preferably above 10.0.

The Charpy notched impact strength (non-instrumented, ISO 179-1 at +23 °C) of the mixed-plastics polypropylene blend (Blend-A1) is preferably higher than 4.5 $kJ/m^2$, more preferably higher than 5.0 $kJ/m^2$, most preferably higher than 5.4 $kJ/m^2$, such as 6.9 $kJ/m^2$.

A method of for obtaining a mixed-plastics polypropylene Blend A1 comprises the following steps:

a) providing a precursor mixed plastic recycling stream (A);

b) sieving the precursor mixed plastic recycling stream (A) to create a sieved mixed plastic recycling stream (B) having only articles with a longest dimension in the range from 30 to 400 mm;

c) sorting the sieved mixed plastic recycling stream (B) by means of one or more optical sorters wherein the sieved mixed plastic recycling stream (B) is at least sorted by colour and optionally also by polyolefin type and/or article form, thereby generating one or more single-colour sorted polyolefin recycling stream(s) (C) and a mixed-colour sorted polyolefin recycling stream (CM), wherein each of the one or more single-colour sorted polyolefin recycling stream(s) (C) and the mixed-colour sorted polyolefin recycling stream (CM) are subjected separately to steps d) and beyond;

d) shredding the sorted polyolefin recycling stream (C or CM) to form a flaked polyolefin recycling stream (D);

e) washing the flaked polyolefin recycling stream (D) with a first aqueous washing solution (W1) without the input of thermal energy, thereby generating a first suspended polyolefin recycling stream (E);

f) removing at least part of the first aqueous washing solution (W1), preferably substantially all of the first aqueous washing solution (W1), from the first suspended polyolefin recycling stream (E) to obtain a first washed polyolefin recycling stream (F);

g) washing the first washed polyolefin recycling stream (F) with a second aqueous washing solution (W2) thereby generating a second suspended polyolefin recycling stream (G), wherein sufficient thermal energy is introduced to the second suspended polyolefin recycling stream (G) to provide a temperature in the range from 65 to 95 °C during the washing;

h) removing the second aqueous washing solution (W2) and any material not floating on the surface of the second aqueous washing solution from the second suspended polyolefin recycling stream (G) to obtain a second washed polyolefin recycling stream (H);

i) drying the second washed polyolefin recycling stream (H), thereby obtaining a dried polyolefin recycling stream (I);

j) optionally separating the dried polyolefin recycling stream (I) into a light fraction and a heavy fraction polyolefin recycling stream (J);

k) optionally further sorting the heavy fraction polyolefin recycling stream (J) or, in the case that step j) is absent, the dried polyolefin recycling stream (I) by means of one or more optical sorters sorting for one or more target polyolefins by removing any flakes containing material other than the one or more target polyolefins, yielding a purified polyolefin recycling stream (K);

l) optionally melt extruding, preferably pelletizing, the purified polyolefin recycling stream (K), preferably wherein additives (Ad) are added in the melt state, to form an extruded, preferably pelletized, recycled polyolefin product (L); and

m) optionally aerating the recycled polyolefin product (L) or, in the case that step I) is absent, the purified polyolefin recycling stream (K) to remove volatile organic compounds, thereby generating an aerated recycled polyolefin product (M), being either an aerated extruded, preferably pelletized, recycled polyolefin product (M1) or aerated recycled polyolefin flakes (M2),

wherein the order of steps I) and m) can be interchanged, such that the purified polyolefin recycling stream (K) is first aerated to form aerated recycled polyolefin flakes (M2) that are subsequently extruded to form an extruded, preferably pelletized, aerated recycled polyolefin product (M3), which is the polypropylene mixed color blend A1 as described above.

Mixed-plastics polypropylene blend (Blend A2)

In another embodiment, the mixed-plastics polypropylene blend (Blend A2) has

(i) a crystalline fraction (CF) content determined according to CRYSTEX QC analysis in the range from 86.0 - 94.0 wt%, preferably 91.0 to 94.0 wt%, and

(ii) a soluble fraction (SF) content determined according to CRYSTEX QC analysis in the range from 6.0-14.0 wt%, more preferably 6.0 to 9.0 wt.-%, whereby

(iii) said crystalline fraction (CF) has a propylene content (C3(CF)) as determined by FT-IR spectroscopy calibrated by quantitative $^{13}$C-NMR spectroscopy, in the range from 95.0 to 99.0 wt.%; preferably 96.0 to 98.0 wt.-% and whereby

(iv) said crystalline fraction (CF) has an ethylene content (C2(CF)), as determined by FT-IR spectroscopy calibrated by quantitative $^{13}$C-NMR spectroscopy, in the range from 1.0 to 5.0, preferably 2.0 to 4.0 wt.-%, more preferably 2.5 to 3.5 wt.-%; and

(v) said soluble fraction (SF) has an intrinsic viscosity (iV(SF)) in the range from 1.1 to below 1.5 dl/g, preferably 1.25 to below 1.45 dl/g;

whereby

(vi) the mixed-plastics polypropylene blend has a CIELAB color space (L*a*b*) of

- L* from 72.0 to 97.0 preferably from 80.0 to 97.0;
- a* from -5.0 to 0.0;
- b* from 0.0 to below 22.0.

The mixed-plastics polypropylene blend (Blend A2) has preferably a melt flow rate $MFR_2$ (ISO 1133, 2.16 kg, 230°C) of at least 4.0 g/10 min, preferably at least 6.0 g/10 min, more preferably at least 7.0 g/ 10 min, in particular in the range between 4.0 and 12.0 g/10 min, preferably between 6.0 and 10.0 g/10min, more preferably between 7.0 and 9.0 g/10min.

In an embodiment, the crystalline fraction (CF) content determined according to CRYSTEX QC analysis of Blend A2 is preferably in the range from 91.0 to 94.0 wt%, preferably 92.0 to 93.0 wt% and the soluble fraction (SF) content determined according to CRYSTEX QC analysis is in the range of 6.0 to 9.0 wt%, preferably 7.0 to 8.0 wt%.

The mixed-plastics polypropylene blend (Blend A2) preferably has a soluble fraction (SF) obtained by CRYSTEX QC analysis with a content of ethylene (C2(SF)), as determined by FT-IR spectroscopy calibrated by quantitative $^{13}$C-

NMR spectroscopy, in the range from 10.0 to 25.0 wt%, more preferably 12.0 to 25.0 wt%, even more preferably 12.0 to 20.0 wt% and most preferably 14.0 to 19.0 wt%.

The mixed-plastics polypropylene blend (Blend-A2) is preferably characterized by an odor (VDA270-B3) of 4.0 or lower, preferably 3.0.

In a further aspect the mixed-plastics polypropylene blend has a Large Amplitude Oscillatory Shear - Non-Linear Factor (LAOS -NLF) (190°C; 1000%) higher than 2.3, whereby

$$LAOS - NLF = \left| \frac{G_1'}{G_3'} \right|$$

whereby

$G_1$' is the first order Fourier Coefficient
$G_3$' is the third order Fourier Coefficent

The mixed-plastics polypropylene blend has a tensile modulus (ISO 527-2 at a cross head speed of 1 mm/min; 23°C) using injection molded specimens as described in EN ISO 1873-2 (dog bone shape, 4 mm thickness) of at least 1200 MPa, preferably at least 1250 MPa. Usually the tensile modulus (ISO 527-2 at a cross head speed of 1 mm/min; 23°C) of the second embodiment will not be higher than 1400 MPa.

The mixed-plastics polypropylene blend turned out to have excellent processability reflected by a shear thinning factor (STF) being the ratio of eta 0.05 and eta 300 of above 13.0, preferably above 14.0.

The Charpy notched impact strength (non-instrumented, ISO 179-1 at +23 °C) of the mixed-plastics polypropylene blend is preferably higher than 6.0 kJ/m$^2$, more preferably higher than 8.0 kJ/m$^2$, most preferably higher than 8.3 kJ/m$^2$, such as 8.5 kJ/m$^2$.

In a specifically preferred embodiment, the mixed-plastics polypropylene blend (Blend A2) has a notched Charpy impact strength (NIS) (1eA) (non-instrumented, ISO 179-1 at +23 °C) according to ISO 179-1 eA at +23 °C on injection moulded specimens of 80 x 10 x 4 mm prepared according to EN ISO 1873-2 of at least 8.0 kJ/m$^2$, preferably 8.3 kJ/m$^2$, whereby further said soluble fraction (SF) obtained by CRYSTEX QC analysis has an ethylene content (C2(SF)), as determined by FT-IR spectroscopy calibrated by quantitative $^{13}$C-NMR spectroscopy, in the range from 12.0 to 20.0 wt% and further preferably the mixed-plastics polypropylene blend has a CIELAB color space (L*a*b) of

- L* from 72.0 to 97.0, preferably from 80.0 to 97.0;
- a* from -5.0 to 0.0;
- b* from 0.0 to below 22.0

In this specific preferred embodiment, the crystalline fraction (CF) content determined according to CRYSTEX QC analysis of Blend A2 is preferably in the range from 91.0 to 94.0 wt% and the soluble fraction (SF) content determined according to CRYSTEX QC analysis is in the range of 6.0 to 9.0 wt%.

A method of for obtaining a mixed-plastics polypropylene Blend A2 comprises the following steps:

a) providing post-consumer plastic trash;
b) sorting out goods made from polystyrene, polyamide, polyethylene, metals, paper and wood thereby providing a post-consumer plastic material;
c) sorting out colored goods thereby providing a post-consumer plastic material containing mainly white bottles, mainly white yoghurt cups, mainly white cans, mainly colorless panels, mainly colorless component parts and the like;
d) subjecting the selected post-consumer plastic material having mainly white color or being colorless to milling, washing in an aqueous solution with various detergents and subsequent drying, wind sifting and screening;
e) subjecting the pretreated post-consumer plastic material to a further sorting for eliminating non-polyolefin and colored parts;
f) extruding the material and yielding the polypropylene blend according to the present invention in the form of pellets;
g) optionally aeration which is preferably carried out at a temperature in a range of 100-130°C by preheating the post-consumer plastic material to such temperature using an air stream having a temperature of at least 100°C.

Elastomer

As mentioned above, the polyolefin composition according to the invention comprises at least one elastomer as impact modifier.

Suitable elastomers may be ethylene/propylene copolymers that are selected from ethylene / propylene copolymers with different C2/C3 ratio (C2/C3 or C3/C2 elastomers), ethylene/butene copolymers (C2/C4 elastomers), ethylene/octene copolymers (C2/C8 elastomers) grafted ethylene elastomers (such as MAH grafted ethylene elastomer) or C2/C3 and C2/C4 block copolymers, in particular an ethylene based 1-octene elastomer.

The elastomer preferably used is a ultra-low density ethylene-octene copolymer (EO-CoP) with good flow characteristics and impact properties in blends with polypropylene and polyethylene. The ethylene based 1-octene elastomer has an MFR (190 °C, 2.16 kg) between 0.5 and 30.0 g/10 min, preferably between 1.0 and 20.0 g/10 min, more preferably between 1.0 and 10.0 g/10 min and a density between 800 - 950 kg/m$^3$, preferably between 800 and 900 kg/m$^3$.

In a preferred embodiment the ethylene based 1-octene elastomer may have an MFR (190 °C, 2.16 kg) between 0.5 and 8.0 g/10 min, a density between 850 - 860 kg/m$^3$. Such a compound is commercially available.

Polypropylene Virgin Homopolymers

As mentioned above, the polyolefin composition may comprise at least one polypropylene homopolymer.

The polypropylene homopolymer used as virgin homopolymer in the present polyolefin composition may be selected from a group comprising

- a polypropylene homopolymer (PPH-1 ) having a melt flow rate MFR$_2$ (230°C, 2.16 kg, measured according to ISO 1133) in the range of range of 10.0 to 30.0 g/10min, preferably of 15.0 to 25.0 g/10min, more preferably of 20.0 g/10 min, and/or
- a polypropylene homopolymer (PPH-2) having a melt flow rate MFR$_2$ (230°C, 2.16 kg, measured according to ISO 1133) in the range of 5.0 to 15.0 g/10 min, preferably of 5.0 to 10.0 g/10min, more preferably of 7.5 to 8.5 g/10 min.

Polypropylene homopolymer (PPH-1):

The at least one polypropylene homopolymer (PPH-1) has a melt flow rate MFR$_2$ (230°C, 2.16 kg, measured according to ISO 1133) in the range of 10.0 to 30.0 g/10min, preferably of 15.0 to 25.0 g/10 min, preferably of 20.0 g/10 min; and a tensile modulus (ISO 527-2) of higher than 1800 MPa, preferably higher than 2000 MPa, most preferably of 2200 MPa.

The polypropylene homopolymer (PPH-1) consists substantially, i.e. of more than 99.7 wt%, still more preferably of at least 99.8 wt%, of propylene units, based on the weight of the propylene homopolymer (PPH-1). In a preferred embodiment only propylene units are detectable in the propylene homopolymer (PPH-1).

It is appreciated that the polypropylene homopolymer (PPH-1) features a low amount of xylene cold soluble (XCS) fraction. The polypropylene homopolymer (PPH-1) may have an amount of xylene cold solubles (XCS) fraction of not more than 4.0 wt%, preferably not more than 3.0 wt%, more preferably not more than 2.5 wt%, like in the range of 0.1 to 4.0 wt%, preferably in the range of 0.1 to 3.0 wt%, more preferably in the range from 0.1 to 2.5 wt%, based on the weight of the polypropylene homopolymer (PPH-1).

The polypropylene homopolymer (PPH-1) may have a heat deflection temperature (HDT) measured according to ISO 75-2 of at least 90°C, preferably at least 100°C, more preferably at least 115°C, like in the range of 90 to 160°C, preferably in the range of 100 to 150°C, more preferably 115 to 130°C.

The polypropylene homopolymer (PPH-1) may have a Charpy Impact Strength measured according to ISO 179-1eA:at 23°C of at least 1.0 kJ/m$^2$, preferably, at least 2.0 kJ/m$^2$, like in the range of 1.0 to 10 kJ/m$^2$, preferably in the range of 2.0 to 5.0 kJ/m$^2$, like 2.5 kJ/m$^2$. The polypropylene homopolymer (PPH-1) may have a flexural modulus measured according to ISO 178 of at least 500 MPa, preferably at least 1500 MPa, like in the range of 500 to 3500 MPa, preferably in the range of 1500 to 2500 MPa, like 2000 MPa.

The polypropylene homopolymer (PPH-1) may comprise a nucleating agent, which is preferably a polymeric nucleating agent, more preferably an alpha-nucleating agent, e.g. a polymeric alpha-nucleating agent. The alpha-nucleating agent content of the polypropylene homopolymer (PPH-1), is preferably up to 5.0 wt%. In a preferred embodiment, the polypropylene homopolymer (PPH-1) contains not more than 3000 ppm, more preferably of 1 to 2000 ppm of alpha-nucleating agent.

The polypropylene homopolymer (PPH-1) is known in the art and for example commercially available from Borealis AG. The use of PPH-1 is preferred.

Polypropylene homopolymer (PPH-2):

The at least one polypropylene homopolymer (PPH-2) has a melt flow rate MFR$_2$ (230°C, 2.16 kg, measured according to ISO 1133) in the range of 5.0 to 15.0 g/10 min, preferably of 5.0 to 10.0 g/10min, more preferably of 8.0 g/10 min; and a tensile modulus (ISO178) of higher than 800 MPa, preferably higher than 1000 MPa, more preferably of higher than 1300 MPa.

The polypropylene homopolymer (PPH-2) has a melting temperature of at least 150°C; preferably of at least 158°C, preferably in the range of 158 to 167°C, like 162°C. The polypropylene homopolymer (PPH-2) may have a flexural modulus measured according to ISO 178 of at least 500 MPa, preferably at least 1000 MPa, preferably in the range of 1200 to 2000 MPa, like 1400 MPa.

A preferred material for polypropylene homopolymer (PPH-2) is inter alia commercially available from Borealis AG (Austria) under the name of HD601CF. Alternative suitable materials are high crystallinity polypropylene homopolymers as described for example in WO 03/031174 A2.

Glass fibers

As mentioned above, the polyolefin composition according to the invention comprises glass fibers, in particular short glass fibers.

The glass fibers used in the polyolefin composition according to the invention preferably have an average fiber length in the range of from 2.0 to 10.0 mm, preferably in the range of 2.0 to 8.0 mm, even more preferably in the range of 2.0 to 6.0 mm, still more preferably in the range of 3.0 to 5.5 mm, even more preferably of 3.5 - 5.0 mm.

It is further preferred that the short glass fibers used in the fiber reinforced composite preferably have an average diameter of from 5 to 20 $\mu$m, more preferably from 8 to 18 $\mu$m, still more preferably 8 to 15 $\mu$m, even more preferably 10-15 $\mu$m, preferably of 11-14 $\mu$m, preferably 12-14 $\mu$m, more preferably of 12.3-13.7 $\mu$m, even more preferably of 12.5-13.5 $\mu$m, or of 9 to 11 $\mu$m.

In one preferred embodiment glass fibers are used which have a fiber length of 3.0 - 5.0 mm (average 4.0 mm), and a fiber diameter of 12.3 - 13.7 $\mu$m (average 13 $\mu$m). In another preferred embodiment glass fibers are used which have a fiber length of 3.5 - 5.5 mm (average 4.5 mm), and a fiber diameter of 12 - 14 $\mu$m (average 13 $\mu$m)). In another embodiment the fiber diameter may be 9-10 $\mu$m (average 10 $\mu$m)

Coupling agent / dosing agent

In an embodiment, the polyolefin composition according to the invention comprises at least one coupling agent. The at least one coupling agent is a functionalized polypropylene, in particular a polypropylene functionalized with maleic anhydride (MAH). The amount of coupling agent in the polyolefin composition may be 1-2 wt%, such as 1 wt% or 1.25 wt%. It is to be understood that no silane or aluminate coupling agents are used in the present polyolefin composition.

In one embodiment the polyolefin composition may comprise at least one dosing agent for accepting fillers/pigments during extrusion. The at least one dosing agent may be a polypropylene homopolymer with melt flow rates $MFR_2$ between 1.0 and 5.0 g/10 min, preferably between 2.0 and 3.0 g/10 min and a density between 800 and 100 kg/m$^3$, preferably between 900 and 950 kg/m$^3$. Such a polymer is commercially available from Borealis AG. The amount of dosing agent in the polyolefin composition may be 1-2 wt%, such as 1.2-1.4 wt%.

Additives

In a further embodiment the polyolefin composition may comprise further additives. Examples of additives for use in the composition are pigments or dyes (for example carbon black), stabilizers (anti-oxidant agents), anti-acids and/or anti-UVs, antistatic agents, nucleating agents and utilization agents (such as processing aid agents). Preferred additives are carbon black, at least one antioxidant and/or at least one UV stabilizer.

Generally, the amount of these additives is in the range of 0 to 5.0 wt%, preferably in the range of 0.01 to 3.0 wt%, more preferably from 0.01 to 2.0 wt% based on the weight of the total composition.

Examples of antioxidants which are commonly used in the art, are sterically hindered phenols (such as CAS No. 6683-19-8, also sold as Irganox 1010 FF™ by BASF), phosphorous based antioxidants (such as CAS No. 31570-04-4, also sold as Hostanox PAR 24 (FF)™ by Clariant, or Irgafos 168 (FF)TM by BASF), sulphur based antioxidants (such as CAS No. 693- 36-7, sold as Irganox PS-802 FL™ by BASF), nitrogen-based antioxidants (such as 4,4'- bis(1,1'-dimethylbenzyl)diphenylamine), or antioxidant blends. Preferred antioxidants may be Tris (2,4-di-t-butylphenyl) phosphite and/or Octadecyl 3-(3',5'-di-tert. butyl-4-hydroxyphenyl)propionate.

Anti-acids are also commonly known in the art. Examples are calcium stearates, sodium stearates, zinc stearates, magnesium and zinc oxides, synthetic hydrotalcite (e.g. SHT, CAS-No. 11097-59-9), lactates and lactylates, as well as calcium stearate (CAS No. 1592-23-0) and zinc stearate (CAS No. 557-05-1).

Common antiblocking agents are natural silica such as diatomaceous earth (such as CAS No. 60676-86-0 (SuperfFloss™), CAS-No. 60676-86-0 (SuperFloss E™), or CAS-No. 60676-86-0 (Celite 499™)), synthetic silica (such as CAS-No. 7631-86-9, CAS-No. 7631-86-9, CAS-No. 7631-86-9, CAS-No. 7631-86-9, CAS-No. 7631-86-9, CAS-No. 7631-86-9, CAS-No. 112926-00-8, CAS-No. 7631-86-9, or CAS-No. 7631-86-9), silicates (such as aluminium silicate (Kaolin) CAS-no. 1318-74-7, sodium aluminum silicate CAS-No. 1344-00-9, calcined kaolin CAS-No. 92704-41-1, aluminum silicate CAS-No. 1327-36-2, or calcium silicate CAS-No. 1344-95-2), synthetic zeolites (such as sodium calcium aluminosilicate hydrate CAS-No. 1344-01-0, CAS-No. 1344-01-0, or sodium calcium aluminosilicate, hydrate CAS-No. 1344-01-0).

Anti-UVs are, for example, Bis-(2,2,6,6-tetramethyl-4-piperidyl)-sebacate (CAS -No. 52829-07-9, Tinuvin 770); 2-hydroxy-4-n-octoxy-benzophenone (CAS-No. 1843-05-6, Chimassorb 81). Preferred UV stabilizers may be low and/or high molecular weight UV stabilizers such as n-Hexadecyl- 3,5-di-t-butyl-4-hydroxybenzoate, a mixture of esters of 2,2,6,6-tetramethyl-4-piperidinol and higher fatty acids (mainly stearic acid) and/or Poly((6-morpholino-s-triazine-2,4-diyl) (1,2,2,6,6-pentamethyl-4-piperidyl)imino)hexameth-ylene (1,2,2,6,6-pentamethyl-4-piperidyl)imino)).

Alpha nucleating agents like sodium benzoate (CAS No. 532-32-1); 1,3:2,4-bis(3,4-dimethylbenzylidene) sorbitol (CAS 135861-56-2, Millad 3988).

Suitable antistatic agents are, for example, glycerol esters (CAS No. 97593-29-8) or ethoxylated amines (CAS No. 71786-60-2 or 61791-31-9) or ethoxylated amides (CAS No. 204-393-1).

Usually these additives are added in quantities of 100-2.000 ppm for each individual component of the polymer.

It is appreciated that the present invention also refers to a process for producing the polyolefin compositions as defined herein. The process comprises the steps of

- providing a mixture of the mixed-plastics polypropylene blend of recycled material, glass fibers, the at least one elastomer and optionally the at least one polypropylene homopolymer in the required amounts;
- melting the mixture in an extruder, and
- optionally pelletizing the obtained polyolefin composition.

For the purposes of the present invention, any suitable melting and mixing means known in the art may be used for carrying out the mixing and melting.

However, the melting and mixing step preferably takes place in a mixer and/or blender, high or low shear mixer, high-speed blender, or a twin-screw extruder. Most preferably, the melting and mixing step takes place in a twin-screw extruder such as a co-rotating twin-screw extruder. Such twin-screw extruders are well known in the art and the skilled person will adapt the melting and mixing conditions (such as melting temperature, screw speed and the like) according to the process equipment. It is to be noted that the length of the glass fiber may decrease during the compounding process. For example the glass fiber length may be reduced to lower than $2\,000\,\mu m$, preferably lower than $1500\,\mu m$, more preferably lower than $1000\,\mu m$, even more preferably lower than $800\,\mu m$, such as $500\,\mu m$.

The present invention is also directed to an article comprising the polyolefin composition according to the invention.

The polyolefin composition according to the invention can be used for a wide range of applications, for example for manufacturing structural products, pumps, fans, appliances, automotive parts, pipes and fittings, packaging, caps and closures.

### Experimental Section

The following Examples are included to demonstrate certain aspects and embodiments of the invention as described in the claims. It should be appreciated by those of skill in the art, however, that the following description is illustrative only and should not be taken in any way as a restriction of the invention.

### Test Methods

The following definitions of terms and determination methods apply for the above general description of the invention as well as to the below examples unless otherwise defined.

### a) CRYSTEX : Determination of Crystalline and soluble fractions and their respective properties (IV and Ethylene content)

The crystalline (CF) and soluble fractions (SF) of the polypropylene (PP) compositions as well as the comonomer content and intrinsic viscosities of the respective fractions were analyzed by use of the CRYSTEX instrument, Polymer Char (Valencia, Spain). Details of the technique and the method can be found in literature (Ljiljana Jeremic, Andreas Albrecht, Martina Sandholzer & Markus Gahleitner (2020) Rapid characterization of high-impact ethylene-propylene copolymer composition by crystallization extraction separation: comparability to standard separation methods, International Journal of Polymer Analysis and Characterization, 25:8, 581-596).

The crystalline and amorphous fractions are separated through temperature cycles of dissolution at 160°C, crystallization at 40°C and re-dissolution in 1,2,4-trichlorobenzene at 160°C. Quantification of SF and CF and determination of ethylene content (C2) are achieved by means of an integrated infrared detector (IR4) and for the determination of the intrinsic viscosity (IV) an online 2-capillary viscometer is used.

The IR4 detector is a multiple wavelength detector measuring IR absorbance at two different bands (CH3 stretching vibration (centred at app. 2960 cm$^{-1}$) and the CH stretching vibration (2700-3000 cm$^{-1}$) that are serving for the determination of the concentration and the Ethylene content in Ethylene-Propylene copolymers. The IR4 detector is calibrated with series of 8 EP copolymers with known Ethylene content in the range of 2 wt.-% to 69 wt.-% (determined by 13C-NMR) and each at various concentrations, in the range of 2 and 13mg/ml. To encounter for both features, concentration and ethylene content at the same time for various polymer concentrations expected during Crystex analyses the following calibration equations were applied:

$$Conc = a + b*Abs(CH) + c*(Abs(CH))^2 + d*Abs(CH_3) + e*(Abs(CH_3)^2 + f*Abs(CH)*Abs(CH_3)$$

(Equation 1)

$$CH_3/1000C = a + b*Abs(CH) + c* Abs(CH_3) + d * (Abs(CH_3)/Abs(CH)) + e * (Abs(CH_3)/Abs(CH))^2$$     (Equation 2)

The constants a to e for equation 1 and a to f for equation 2 were determined by using least square regression analysis.

The $CH_3/1000C$ is converted to the ethylene content in wt.-% using following relationship:

$$Wt.\text{-}\% \ (Ethylene \ in \ EP \ Copolymers) = 100 - CH_3/1000TC * 0.3$$     (Equation 3)

Amounts of Soluble Fraction (SF) and Crystalline Fraction (CF) are correlated through the XS calibration to the "Xylene Cold Soluble" (XCS) quantity and respectively Xylene Cold Insoluble (XCI) fractions, determined according to standard gravimetric method as per ISO16152. XS calibration is achieved by testing various EP copolymers with XS content in the range 2-31 Wt%. The determined XS calibration is linear:

$$Wt.\text{-}\% \ XS = 1{,}01 * Wt.\text{-}\% \ SF$$     (Equation 4)

Intrinsic viscosity (IV) of the parent EP copolymer and its soluble and crystalline fractions are determined with a use of an online 2-capillary viscometer and are correlated to corresponding IV's determined by standard method in decalin according to ISO 1628-3. Calibration is achieved with various EP PP copolymers with IV = 2-4 dL/g. The determined calibration curve is linear:

$$IV \ (dL/g) = a* Vsp/c \ (equation \ 5)$$

The samples to be analyzed are weighed out in concentrations of 10mg/ml to 20mg/ml. To avoid injecting possible gels and/or polymers, which do not dissolve in TCB at 160°C, like PET and PA, the weighed out sample was packed into a stainless steel mesh MW 0,077/D 0,05mmm.

After automated filling of the vial with 1,2,4-TCB containing 250 mg/l 2,6-tert-butyl-4-methylphenol (BHT) as antioxidant, the sample is dissolved at 160°C until complete dissolution is achieved, usually for 60 min, with constant stirring of 400rpm. To avoid sample degradation, the polymer solution is blanketed with the N2 atmosphere during dissolution.

A defined volume of the sample solution is injected into the column filled with inert support where the crystallization of the sample and separation of the soluble fraction from the crystalline part is taking place. This process is repeated two times. During the first injection the whole sample is measured at high temperature, determining the IV[dl/g] and the C2[wt%] of the PP composition. During the second injection, the soluble fraction (at low temperature) and the crystalline fraction (at high temperature) with the crystallization cycle are measured (Wt% SF, Wt% C2, IV).

**b) Quantification of microstructure by NMR spectroscopy (calibration only)**

Quantitative nuclear-magnetic resonance (NMR) spectroscopy was used for calibration.

Quantitative 13C{1H} NMR spectra were recorded in the solution-state using a Bruker Avance Neo 400 NMR spectrometer operating at 400.15 and 100.62 MHz for 1H and 13C respectively. All spectra were recorded using a 13C optimized 10 mm extended temperature probe head at 125°C using nitrogen gas for all pneumatics. Approximately 200 mg of material was dissolved in approximately 3 ml of 1,2-tetrachloroethane-d2 (TCE-d2) along with approximately 3 mg BHT (2,6-di-tert-butyl-4-methylphenol CAS 128-37-0) and chromium-(III)-acetylacetonate (Cr(acac)3) resulting in a 60 mM solution of relaxation agent in solvent as described in G. Singh, A. Kothari, V. Gupta, Polymer Testing 2009, 28(5), 475.

To ensure a homogenous solution, after initial sample preparation in a heat block, the NMR tube was further heated in a rotatory oven for at least 1 hour. Upon insertion into the magnet the tube was spun at 10 Hz. This setup was chosen primarily for the high resolution and quantitatively needed for accurate ethylene content quantification. Standard single-pulse excitation was employed without NOE, using an optimised tip angle, 1 s recycle delay and a bi-level WALTZ16 decoupling scheme as described in Z. Zhou, R. Kuemmerle, X. Qiu, D. Redwine, R. Cong, A. Taha, D. Baugh, B. Winniford, J. Mag. Reson. 187 (2007) 225 and V. Busico, P. Carbonniere, R. Cipullo, C. Pellecchia, J. Severn, G. Talarico, Macromol. Rapid Commun. 2007, 28, 1128. A total of 6144 (6k) transients were acquired per spectra.

Quantitative 13C{1H} NMR spectra were processed, integrated and relevant quantitative properties determined from the integrals. All chemical shifts were indirectly referenced to the central methylene group of the ethylene block (EEE) at 30.00 ppm using the chemical shift of the solvent. This approach allowed comparable referencing even when this structural unit was not present.

Characteristic signals corresponding to the incorporation of ethylene were observed (as described in Cheng, H. N., Macromolecules 1984, 17, 1950) and the comonomer fraction calculated as the fraction of ethylene in the polymer with respect to all monomer in the polymer:

$$fE = ( E / ( P + E )$$

The comonomer fraction was quantified using the method of W-J. Wang and S. Zhu, Macromolecules 2000, 33 1157, through integration of multiple signals across the whole spectral region in the 13C{1H} spectra. Integral regions were slightly adjusted to increase applicability across the whole range of encountered comonomer contents.

The mole percent comonomer incorporation was calculated from the mole fraction:

$$E \ [mol\%] = 100 * fE$$

The weight percent comonomer incorporation was calculated from the mole fraction:

$$E \ [wt\%] = 100 * ( fE * 28.06 ) / ( (fE * 28.06) + ((1-fE) * 42.08) ).$$

**c) Tensile modulus and tensile strain at yield / break** were measured according to ISO 527-2 (cross head speed = 1 mm/min; test speed 50 mm/min at 23 °C) using injection molded specimens as described in EN ISO 1873-2 (dog bone shape, 4 mm thickness). The measurement is done after 96 h conditioning time of the specimen.

**d) Impact strength** was determined as notched Charpy impact strength (1eA) (non-instrumented, ISO 179-1 at +23 °C) according to ISO 179-1 eA at +23 °C on injection moulded specimens of 80 x 10 x 4 mm prepared according to EN ISO 1873-2.

**e) Inorganic residues:** TGA according to DIN ISO 1172:1996 using a Perkin Elmer TGA 8000. Approximately 10-20 mg of material was placed in a platinum pan. The temperature was equilibrated at 50°C for 10 minutes, and afterwards raised to 950°C under nitrogen at a heating rate of 20 °C/min. The ash content was evaluated as the weight % at 850°C.

**f) MFR:** melt flow rates were measured with a load of 2.16 kg ($MFR_2$) at 230 °C. The melt flow rate is that quantity of polymer in grams, which the test apparatus standardized to ISO 1133 extrudes within 10 minutes at a temperature of 230 °C under a load of 2.16 kg.

**g) Amount of Metals**
determined by x ray fluorescence (XRF).

**h) Amount of Paper, Wood (for control purposes only)**
paper and wood can be determined by conventional laboratory methods including milling, floatation, microscopy and Thermogravimetric Analysis (TGA).

### i) Benzene content

by **HS GC-MS 80°C/2h,** which is described as the following
**Static headspace analysis**
The parameters of the applied static headspace gas chromatography mass spectrometry (HS/GC/MS) method are described here.

4.000 $\pm$ 0.100 g sample were weighed in a 20 ml HS vial and tightly sealed with a PTFE cap.

The mass spectrometer was operated in scan mode and a total ion chromatogram (TIC) was recorded for each analysis. More detailed information on applicable method parameters and data evaluation are given below:

- HS parameter (Agilent G1888 Headspace Sampler)

| | |
|---|---|
| Vial equilibration time: | 120 min |
| Oven temperature: | 80 °C |
| Loop temperature: | 205 °C |
| Transfer line temperature: | 210 °C |

Low shaking

- GC parameter (Agilent 7890A GC System)

| | |
|---|---|
| Column: | ZB-WAX 7HG-G007-22 (30 m x 250 $\mu$m x 1 $\mu$m) |
| Carrier gas: | Helium 5.0 |
| Flow: | 2 ml/min |
| Split: | 5:1 |
| GC oven program: | 35 °C for 0.1 min |

10 °C/min until 250 °C
250 °C for 1 min

- MS parameter (Agilent 5975C inert XL MSD)

| | |
|---|---|
| Acquisition mode: | Scan |
| Scan parameters: | |
| Low mass: | 20 |
| High mass: | 200 |
| Threshold: | 10 |

- Software/Data evaluation

MSD ChemStation E.02.02.1431
MassHunter GC/MS Acquisition B.07.05.2479
AMDIS GC/MS Analysis Version 2.71
NIST Mass Spectral Library Version 2.0 g

- AMDIS deconvolution parameters

| | |
|---|---|
| Minimum match factor: | 80 |
| Threshold: | Low |
| Scan direction: | High to Low |
| Data file format: | Agilent files |
| Instrument type: | Quadrupole |
| Component width: | 20 |
| Adjacent peak subtraction: | Two |
| Resolution: | High |

(continued)

| | |
|---|---|
| Sensitivity: | Very high |
| Shape requirements: | Medium |
| Solvent tailing: | 44 m/z |
| Column bleed: | 207 m/z |
| Min. model peaks: | 2 |
| Min. S/N: | 10 |
| Min. certain peaks: | 0.5 |

Data evaluation

The TIC data were further deconvoluted with the aid of AMDIS software (see parameters stated above) and compared to a custom target library which was based on the mass spectral library (NIST). In the custom target library, the respective mass spectra of selected substances (e.g. benzene) were included. Only when the recognised peak showed a minimum match factor of 80 and an experienced mass spectroscopist confirmed the match, a substance was accepted as "tentatively identified".

In this study, the statement "below the limit of detection (< LOD)" referred to a condition where either the match factor was below 80 (AMDIS) or the peak as such was not even recognised. The results refer solely to the measured samples, time of measurement and the applied parameters.

## j) CIELAB color space (L*a*b*)

In the CIE L*a*b* uniform color space, measured according to DIN EN ISO 11664-4, the color coordinates are: L*-the lightness coordinate; a*-the red/green coordinate, with +a* indicating red, and -a* indicating green; and b*-the yellow/blue coordinate, with +b* indicating yellow, and -b* indicating blue. The L*, a*, and b*coordinate axis define the three dimensional CIE color space. Standard Konica/Minolta Colorimeter CM-3700A.

## k) Odor VDA270-B3

VDA 270 is a determination of the odor characteristics of trim-materials in motor vehicles. In this study, the odor is determined following VDA 270 (2018) variant B3. The odor of the respective sample is evaluated by each assessor according to the VDA 270 scale after lifting the jar's lid as little as possible. The hexamerous scale consists of the following grades: Grade 1: not perceptible, Grade 2: perceptible, not disturbing, Grade 3: clearly perceptible, but not disturbing, Grade 4: disturbing, Grade 5: strongly disturbing, Grade 6: not acceptable. Assessors stay calm during the assessment and are not allowed to bias each other by discussing individual results during the test. They are not allowed to adjust their assessment after testing another sample, either. For statistical reasons (and as accepted by the VDA 270) assessors are forced to use whole steps in their evaluation. Consequently, the odor grade is based on the average mean of all individual assessments, and rounded to whole numbers.

## l) Limonene detection

Limonene quantification can be carried out using solid phase microextraction (HS-SPME-GC-MS) by standard addition.

50 mg ground samples are weighed into 20 mL headspace vials and after the addition of limonene in different concentrations and a glass-coated magnetic stir bar, the vial is closed with a magnetic cap lined with silicone/PTFE. Micro capillaries (10 pL) are used to add diluted limonene standards of known concentrations to the sample. Addition of 0, 2, 20 and 100 ng equals 0 mg/kg, 0.1 mg/kg, 1mg/kg and 5 mg/kg limonene, in addition standard amounts of 6.6 mg/kg, 11 mg/kg and 16.5 mg/kg limonene is used in combination with some of the samples tested in this application. For quantification, ion-93 acquired in SIM mode is used. Enrichment of the volatile fraction is carried out by headspace solid phase microextraction with a 2 cm stable flex 50/30 pm DVB/Carboxen/PDMS fibre at 60°C for 20 minutes. Desorption is carried out directly in the heated injection port of a GCMS system at 270°C.

GCMS Parameters:

Column: 30 m HP 5 MS 0.25*0.25
Injector: Splitless with 0.75 mm SPME Liner, 270°C
Temperature program: -10°C (1 min)
Carrier gas: Helium 5.0, 31 cm/s linear velocity, constant flow

MS: Single quadrupole, direct interface, 280°C interface temperature
Acquisition: SIM scan mode
Scan parameter: 20-300 amu
SIM Parameter: m/Z 93, 100 ms dwell time

**m) Fatty acid detection**

Fatty acid quantification is carried out using headspace solid phase micro-extraction (HS-SPME-GC-MS) by standard addition.

50 mg ground samples are weighed in 20 mL headspace vial and after the addition of limonene in different concentrations and a glass coated magnetic stir bar the vial is closed with a magnetic cap lined with silicone/PTFE. 10 µL Micro-capillaries are used to add diluted free fatty acid mix (acetic acid, propionic acid, butyric acid, pentanoic acid, hexanoic acid and octanoic acid) standards of known concentrations to the sample at three different levels. Addition of 0, 50, 100 and 500 ng equals 0 mg/kg, 1 mg/kg, 2 mg/kg and 10 mg/kg of each individual acid. For quantification ion 60 acquired in SIM mode is used for all acids except propanoic acid, here ion 74 is used.

GCMS Parameter:

Column: 20 m ZB Wax plus 0.25*0.25
Injector: Split 5:1 with glass lined split liner, 250°C
Temperature program: 40°C (1 min) @6°C/min to 120°C, @15°C to 245 °C (5 min)
Carrier: Helium 5.0, 40 cm/s linear velocity, constant flow
MS: Single quadrupole, direct interface, 220°C inter face temperature
Acquisition: SIM scan mode
Scan parameter: 46-250 amu 6.6 scans/s
SIM Parameter: m/z 60, 74, 6.6 scans/s

**n) Presence of polyamide-6 and polystyrene**

By FTIR spectroscopy using the absorption of the band at 1601 cm$^{-1}$ (PS) and 3300 cm$^{-1}$ (PA6).

**o) Determination of contaminations on the plaques**

The plaques are injection-moulded, 150x80x2mm dimension. Then, a high- resolution image (photograph) is taken on the 5 plaques (putting them close to each other). The image is then analyzed by a software allowing an automatic counting of the number of visual defects (by naked-eyes) due to contaminations.

**p) Dynamic Shear Measurements (Eta(2.7kPa) and Eta(300rad/s))**

The characterisation of polymer melts by dynamic shear measurements complies with ISO standards 6721-1 and 6721-10. The measurements were performed on an Anton Paar MCR501 stress controlled rotational rheometer, equipped with a 25 mm parallel plate geometry. Measurements were undertaken on compression-moulded plates, using nitrogen atmosphere and setting a strain within the linear viscoelastic regime. The oscillatory shear tests were done at 230°C applying a frequency range between 0.01 and 600 rad/s and setting a gap of 1.3 mm.

In a dynamic shear experiment the probe is subjected to a homogeneous deformation at a sinusoidal varying shear strain or shear stress (strain and stress controlled mode, respectively). On a controlled strain experiment, the probe is subjected to a sinusoidal strain that can be expressed by

$$\gamma(t) = \gamma_0 \sin(\omega t) \qquad (1)$$

If the applied strain is within the linear viscoelastic regime, the resulting sinusoidal stress response can be given by

$$\sigma(t) = \sigma_0 \sin(\omega t + \delta) \qquad (2)$$

where

$\sigma_0$ and $\gamma_0$ are the stress and strain amplitudes, respectively

18

$\omega$ frequency is the angular
$\delta$ is the phase shift (loss angle between applied strain and stress response)
t is the time

Dynamic test results are typically expressed by means of several different rheological functions, namely the shear storage modulus G', the shear loss modulus, G", the complex shear modulus, G*, the complex shear viscosity, $\eta$*, the dynamic shear viscosity, $\eta$', the out-of-phase component of the complex shear viscosity $\eta$" and the loss tangent, tan $\delta$ which can be expressed as follows:

$$G' = \frac{\sigma_0}{\gamma_0} \cos\delta \ [\text{Pa}] \tag{3}$$

$$G' = \frac{\sigma_0}{\gamma_0} \sin\delta \ [\text{Pa}] \tag{4}$$

$$G^* = G' + iG'' \ [\text{Pa}] \tag{5}$$

$$\eta^* = \eta' - i\eta'' \ [\text{Pa.s}] \tag{6}$$

$$\eta' = \frac{G''}{\omega} \ [\text{Pa.s}] \tag{7}$$

$$\eta'' = \frac{G'}{\omega} \ [\text{Pa.s}] \tag{8}$$

ETA(x kPa) is determined according with equation 9.

$$ETA(x\ kPa) = Eta^* \ \ for \ \ (G^* = x\ kPa) \ [\text{Pa.s}] \tag{9}$$

For example, the ETA(2.7 kPa) is the defined by the value of the complex viscosity, determined for a value of complex modulus equal to 2.7 kPa.
Eta (x rad/s) is determined according with equation 10.

$$ETA(x\ rad/s) = Eta^* \ \ for \ \ (\omega = x\ rad/s) \ [\text{Pa.s}] \tag{10}$$

For example, the ETA(300 rad/s) is defined by the value of the complex viscosity, determined at a frequency sweep of 300 rad/s.

**q) Shear Thinning Factor (STF) is defined as**

$$STF = \frac{Eta^* \text{ for } (\omega = 0.05 \text{ rad/s})}{Eta^* \text{ for } (\omega = 300 \text{ rad/s})} \tag{11}$$

The values are determined by means of a single point interpolation procedure, as defined by Rheoplus software. In situations for which a given G* value is not experimentally reached, the value is determined by means of an extrapolation, using the same procedure as before. In both cases (interpolation or extrapolation), the option from Rheoplus "- *Interpolate y-values to x-values from parameter*" and the *"logarithmic interpolation type"* were applied ([1] Rheological characterization of polyethylene fractions" Heino, E.L., Lehtinen, A., Tanner J., Seppälä, J., Neste Oy, Porvoo, Finland, Theor. Appl. Rheol., Proc. Int. Congr. Rheol, 11th (1992), 1, 360-362; [2] The influence of molecular structure on some rheological properties of polyethylene", Heino, E.L., Borealis Polymers Oy, Porvoo, Finland, Annual Transactions of the Nordic Rheology Society, 1995.) [3] Definition of terms relating to the non-ultimate mechanical properties of polymers, Pure & Appl. Chem., Vol. 70, No. 3, pp. 701-754, 1998.)

**r) LARGE AMPLITUDE OSCILLATORY SHEAR (LAOS)**

The investigation of the non-linear viscoelastic behavior under shear flow was done resorting to Large Amplitude Oscillatory Shear. The method requires the application of a sinusoidal strain amplitude, $\gamma 0$, imposed at a given angular frequency, $\omega$, for a given time, t. Provided that the applied sinusoidal strain is high enough, a non-linear response is generated. The stress, $\sigma$ is in this case a function of the applied strain amplitude, time and the angular frequency. Under these conditions, the non-linear stress response is still a periodic function; however, it can no longer be expressed by a single harmonic sinusoid. The stress resulting from a non-linear viscoelastic response [0-0] can be expressed by a Fourier series, which includes the higher harmonics contributions:

$$\sigma(t, \omega, \gamma_0) = \gamma_0 . \sum_n \left[ G'_n(\omega, \gamma_0). \sin(n\omega t) + G''_n(\omega, \gamma_0). \cos(n\omega t) \right] \quad (1)$$

with,

$\sigma$ - stress response
t - time
$\omega$- frequency
$\gamma_0$ - strain amplitude
$n$- harmonic number
$G'_n$- n order elastic Fourier coefficient
$G''_n$- n order viscous Fourier coefficient

The non-linear viscoelastic response was analysed applying Large Amplitude Oscillatory Shear (LAOS). Time sweep measurements were undertaken on an RPA 2000 rheometer from Alpha Technologies coupled with a standard biconical die. During the course of the measurement the test chamber is sealed and a pressure of about 6 MPa is applied. The LAOS test is done applying a temperature of 190 °C, an angular frequency of 0.628 rad/s and a strain of 1000 %. In order to ensure that steady state conditions are reached, the non-linear response is only determined after at least 20 cycles per measurement are completed. The Large Amplitude Oscillatory Shear Non-Linear Factor (LAOS_NLF) is defined by:

$$LAOS_{NLF}(190°C, 1000\%) = \left| \frac{G'_1}{G'_3} \right| \qquad (2)$$

where

$G'_1$ - first order Fourier Coefficient

$G'_3$ - third order Fourier Coefficient

(J. M. Dealy, K. F. Wissbrun, Melt Rheology and Its Role in Plastics Processing: Theory and Applications; edited by Van Nostrand Reinhold, New York (1990); S. Filipe, Non-Linear Rheology of Polymer Melts, AIP Conference Proceedings 1152, pp. 168-174 (2009); M. Wilhelm, Macromol. Mat. Eng. 287, 83-105 (2002); S. Filipe, K. Hofstadler, K. Klimke, A. T. Tran, Non-Linear Rheological Parameters for Characterisation of Molecular Structural Properties in Polyolefins, Proceedings of Annual European Rheology Conference, 135 (2010); S. Filipe, K. Klimke, A. T. Tran, J. Reussner, Proceedings of Novel Non-Linear Rheological Parameters for Molecular Structural Characterisation of Polyolefins, Novel Trends in Rheology IV, Zlin, Check Republik (2011); K. Klimke, S. Filipe, A. T. Tran, Non-linear rheological parameters for characterization of molecular structural properties in polyolefins, Proceedings of European Polymer Conference, Granada, Spain (2011)).

In Table 1 several examples (comparative-CE; inventive-IE) are summarized.

Different blends of recycled material were used. The blends are characterized by the following properties:

Blend A1 : C2 (CF) content 2-3 wt%, C2 (SF) content 24-25 wt%, C3 (CF) content 95-96 wt%, $MFR_2$ 14.0-17.0 g/ 10 min, tensile modulus 1300 - 1450 MPa, Impact strength (charpy test 23°C) 5.0-6.0 $KJ/m^2$

Blend A2: C2 (CF) content 2-3 wt%, C2 (SF) content 17-18 wt%, C3 (CF) content 97-98 wt%, $MFR_2$ 7.0-8.0 g/ 10 min, tensile modulus 1250 -1300 MPa, Impact strength (charpy test 23°C) 8.0-9.0 $KJ/m^2$

Blends A1/A2 were obtained in the process for obtaining mixed plastics polypropylene as described previously including the step of further sorting out of old ('ancient') mainly colorless / natural plastic articles recognizable by discoloration (e.g. pronounced yellowing) and/or pronounced scratches of the mainly colorless / natural plastic article.

Further recyclate blends of mixed plastics polypropylene are used in comparative examples. These further blends are characterized by a higher ethylene C2 content.

Blend A3 : total C2 content 9-10 wt%, C2 (CF) content 8-12 wt%, C2 (SF) content 29-34 wt%,

Blend A3 is a post-consumer recyclate polypropylene based material having a density (determined according to DIN EN ISO 1183) of 920 kg/m$^3$, a melt flow rate (determined according to DIN EN ISO 1133, 230 °C/2.16 kg) of 14.1 g/10min, a moisture content (determined via a moisture infrared analyzer, 105 °C) of less than 0.1 %, a tensile modulus (determined according to DIN EN ISO 527, 1 mm/min) of more than 1100 MPa, a yield stress (determined according to DIN EN ISO 527, 50 mm/min) of more than 25 MPa, and a tensile strain (determined according to DIN EN ISO 527, 50 mm/min) of more than 180 %.

Table 1 refers to polyolefin compositions comprising: - Comparative Example (CE1): one polypropylene homopolymer (PPH-2) and 30 wt% Glass Fibers; - Comparative Example (CE2): one polypropylene homopolymer (PPH-1); 30 wt% blend of recycled material (Blend A1) and 20 wt% Glass Fibers; - Comparative Example (CE3): one polypropylene homopolymer (PPH-1); 30 wt% blend of recycled material (Blend A1) and 30 wt% Glass Fibers; - Comparative Example (CE4): one polypropylene homopolymer (PPH-1); 30 wt% blend of recycled material (Blend A1) and 40 wt% Glass Fibers; - Comparative Example (CE5): blend of recycled material (Blend A3) and 30 wt% Glass Fibers; - Comparative Example (CE6): blend of recycled material (Blend A3) and 30 wt% Glass Fibers; - Comparative Example (CE7): blend of recycled material (Blend A3), 10 wt% elastomer-2, 10 wt% talc and 30 wt% Glass Fibers; - Comparative Example (CE8): blend of recycled material (Blend A3), 10 wt% elastomer-2, 10 wt% talc and 30 wt% Glass Fibers; -Inventive Example (IE1): polypropylene homopolymer (PPH-1), blend of recycled material (Blend A1), 10 wt% elastomer-1 and 20 wt% Glass Fibers; -Inventive Example (IE2): polypropylene homopolymer (PPH-1), blend of recycled material (Blend A1), 20 wt% elastomer-1 and 20 wt% Glass Fibers; -Inventive Example (IE3): polypropylene homopolymer (PPH-1), blend of recycled material (Blend A1), 10 wt% elastomer-1 and 30 wt% Glass Fibers; -Inventive Example (IE4): polypropylene homopolymer (PPH-1), blend of recycled material (Blend A1), 20 wt% elastomer-1 and 30 wt% Glass Fibers; -Inventive Example (IE5): polypropylene homopolymer (PPH-1), blend of recycled material (Blend A1), 10 wt% elastomer-1 and 40 wt% Glass Fibers; -Inventive Example (IE6): polypropylene homopolymer (PPH-1), blend of recycled material (Blend A1), 20 wt% elastomer-1 and 40 wt% Glass Fibers; and -Inventive Example (IE7: blend of recycled material (Blend A1), 15 wt% elastomer-1 and 40 wt% Glass Fibers.

Glass fibers may be obtained from one of the following suppliers: OC (Owens Corning), PPG / NEG, Johns Manville, 3B, Jushi, Taiwan Glass, Camelyaf, CPIC, Taishan, Glass fibers 1.2. (average length 4 mm, average diameter 13 μm) and 4.1 (average length 4.5 mm, average diameter 13 μm) are used.

Talc is used which is a fine micronised talc with Particle Size $d_{50}$ of about 2.9 - 4.1 μm. The diameter of the commercially available talc is typically measured by the Sedigraph method. The talc is commercially available from known suppliers such as Imerys.

The following additives were used: Antioxidants: AO1 (AO300FLA), AO2 (AO101GRA), AO3 (AO200GRA); Black Pigment (MB 95-BLACK 7-PE-40); Dosing agent: HC001A-B1, PP homopolymer power; Coupling agent: AP 1.5, polypropylene highly functionalized with maleic anhydride.

As can be seen in Table 1 the puncture energy measured on any of IE1-IE7 is higher than for CE1-CE6. The puncture energy measured on IE2, IE4, IE6 and IE7 is also higher than for CE7-CE8. The increase of puncture energy of the inventive compositions containing elastomer combined with a high impact strength was not predictable and thus surprising. This is in particular due to the unpredictable interactions between glass fibers, recyclate, polypropylene and elastomer.

In particular, in respect to CE1 to CE4 and CE5 the balance impact stiffness and impact strength (ratio between Charpy/Modulus, Charpy/Strength, Puncture/Modulus, and Puncture/Strength) is superior for all the IE 1-7. With respect to CE5 to CE8, even without talc the stiffness and strength was maintained and even partially improved, by maintaining a good level of the balance properties, but with the advantage of higher flowability (higher MFR) and lower density. This applied in particular, when comparing CE8 with IE4.

In addition, the Charpy impact strength is higher for IE2-IE7 over any of CE1-CE6 and the Charpy impact strength for IE4, IE6, IE7 is even higher over CE7-C8.

Table 1

| | Unit | CE1 | CE2 | CE3 | CE4 | IE1 | IE2 | IE3 | IE4 | IE5 | IE6 | IE7 | CE5 | CE6 | CE7 | CE8 |
|---|---|---|---|---|---|---|---|---|---|---|---|---|---|---|---|---|
| Glass 4.1 | % | 30 | 20 | 30 | 40 | 20 | 20 | 30 | 30 | 40 | 40 | 40 | | | | |
| Glass 1.2 | | | | | | | | | | | | | 30 | 30 | 30 | 30 |
| TALC 2.9 | | | | | | | | | | | | | 10 | 10 | 10 | 10 |
| dosing agent | % | 0,85 | 1,25 | 1,25 | 1,25 | 1,25 | 1,25 | 1,25 | 1,25 | 1,25 | 1,25 | 1,05 | 1,25 | 1,25 | 1,25 | 1,6 |
| AO1 | % | | 0,4 | 0,4 | 0,4 | 0,4 | 0,4 | 0,4 | 0,4 | 0,4 | 0,4 | | | | | |
| AO2 | % | | 0,25 | 0,25 | 0,25 | 0,25 | 0,25 | 0,25 | 0,25 | 0,25 | 0,25 | | | | | |
| AO3 | % | | 0,1 | 0,1 | 0,1 | 0,1 | 0,1 | 0,1 | 0,1 | 0,1 | 0,1 | | | | | |
| Black Pigment | % | | 0,7 | 0,7 | 0,7 | 0,7 | 0,7 | 0,7 | 0,7 | 0,7 | 0,7 | | | | | |
| coupling agent | % | 1 | 1,5 | 1,5 | 1,5 | 1,5 | 1,5 | 1,5 | 1,5 | 1,5 | 1,5 | 2 | 1,5 | 1,5 | 1,5 | 1,5 |
| PPH-1 | % | | 45,8 | 35,8 | 25,8 | 35,8 | 25,8 | 25,8 | 15,8 | 15,8 | 5,8 | | | | | |
| PPH-2 | % | 66,8 | | | | | | | | | | | | | | |
| ELASTOMER 1 (EO-CoP) | % | | | | | 10 | 20 | 10 | 20 | 10 | 20 | 15,2 | | | | |
| Elastomer 2 | | | | | | | | | | | | | | | 10 | 10 |
| Blend A1 | % | | 30 | 30 | 30 | 30 | 30 | 30 | 30 | 30 | 30 | 40 | | | | |
| Blend A3 | % | | | | | | | | | | | | 55,22 | 55,22 | 45,22 | 44,87 |
| Additives | % | 1,35 | | | | | | | | | | 1,75 | 2,03 | 2,03 | 2,03 | 2,03 |
| | Total | 100,0 | 100,0 | 100,0 | 100,0 | 100,0 | 100,0 | 100,0 | 100,0 | 100,0 | 100,0 | 100,0 | 100,0 | 100,0 | 100,0 | 100,0 |
| Tensile modulus 23°C | [MPa] | 7135 | 5113 | 7137 | 9301 | 4543 | 3826 | 6216 | 4801 | 7628 | 5253 | 6167 | 7323 | 5741 | 5970 | 4504 |
| Tensile strength 23°C | [MPa] | 103 | 76, 96 | 94,64 | 106,6 | 64,24 | 51,03 | 75,12 | 56,85 | 79,31 | 55,87 | 61,72 | 76,36 | 56,42 | 61,52 | 47,73 |
| Charpy 1eA +23°C | [kJ/m$^2$] | 11,6 | 6,32 | 8,13 | 9,1 | 9,53 | 20,07 | 13,83 | 28, 81 | 17,59 | 34,86 | 29,30 | 9,02 | 10,87 | 15,78 | 21,98 |
| Puncture energy 23°C | [J] | 6,06 | 5,01 | 4,93 | 5,31 | 8,41 | 14,33 | 10,02 | 14,96 | 11,05 | 14,15 | 16,57 | 5,52 | 5,99 | 8,94 | 11,84 |

(continued)

|  | Unit |  |  |  |  |  |  |  |  |  |  |  |  |  |  |
|---|---|---|---|---|---|---|---|---|---|---|---|---|---|---|---|
| Charpy/Modulus | $[kJ/m^2]/[MPa]$ | 0,0016 | 0,0012 | 0,0011 | 0,0010 | 0,0021 | 0,0052 | 0,0022 | 0,0060 | 0,0023 | 0,0066 | 0,0048 | 0,0012 | 0,0019 | 0,0026 | 0,0049 |
| Charpy/strength | $[kJ/m^2]/[MPa]$ | 0,113 | 0,082 | 0,086 | 0,085 | 0,148 | 0,393 | 0,184 | 0,507 | 0,222 | 0,624 | 0,475 | 0,118 | 0,193 | 0,257 | 0,461 |
| Puncture/Modulus | [J]/[MPa] | 0,0008 | 0,0010 | 0,0007 | 0,0006 | 0,0019 | 0,0037 | 0,0016 | 0,0031 | 0,0014 | 0,0027 | 0,0027 | 0,0008 | 0,0010 | 0,0015 | 0,0026 |
| Puncture/Strength | [J]/[MPa] | 0,06 | 0,07 | 0,05 | 0,05 | 0,13 | 0,28 | 0,13 | 0,26 | 0,14 | 0,25 | 0,27 | 0,07 | 0,11 | 0,15 | 0,25 |
| MFR2 | g/10min | 2 | 8,66 | 6,7 | 5,82 | 6,94 | 6,33 | 5,88 | 5,1 | 4,89 | 4,09 | 4,6 | 6,59 | 1,83 | 4,73 | 1,78 |
| Density | kg/m3 | 1122 | 1043 | 1126 | 1224 | 1036 | 1029 | 1118 | 1111 | 1215 | 1206 | 1212 | 1232 | 1227 | 1223 | 1223 |

Claims

1. Polyolefin composition comprising

   a) 20-50 wt% (based on the overall weight of the polyolefin composition) of a mixed-plastics polypropylene blend of recycled material having

   (i) a crystalline fraction (CF) content determined according to CRYSTEX QC analysis in the range from 85.0 - 95.0 wt% (based on the total weight of the mixed-plastics polypropylene), and
   (ii) a soluble fraction (SF) content determined according to CRYSTEX QC analysis in the range from 5.0 - 15.0 wt% (based on the total weight of the mixed-plastics polypropylene), whereby crystalline fraction and soluble fraction add up to 100 wt.-% ,
   whereby
   (iii) said crystalline fraction (CF) has a propylene content (C3(CF)) as determined by FT-IR spectroscopy calibrated by quantitative $^{13}$C-NMR spectroscopy, in the range from 93.0 - 99.0 wt% (based on the total weight of the crystalline fraction), and whereby
   (iv) said crystalline fraction (CF) has an ethylene content (C2(CF)), as determined by FT-IR spectroscopy calibrated by quantitative $^{13}$C-NMR spectroscopy, in the range from 1.0 to 7.0 wt.-% (based on the total weight of the crystalline fraction), whereby propylene content and ethylene content add up to 100 wt.-%, and
   (v) said soluble fraction (SF) has an intrinsic viscosity (iV(SF)), as determined with an online 2-capillary viscometer, in the range from 1.0-2.0 dl/g, and
   whereby
   (vi) the mixed-plastics polypropylene blend has a CIELAB color space (L*a*b*) of

   - L* from 30 to 97.0, in particular from 50 to 97.0;
   - a* from -10.0 to 16.0, in particular from -8 to < 10.0;
   - b* from -5.0 to 25.0, in particular from -2 to 22.0,

   b) 20-50 wt% (based on the overall weight of the polyolefin composition) of glass fibers;
   c) 5-25 wt% (based on the overall weight of the polyolefin composition) of at least one elastomer d) 0-50 wt% (based on the overall weight of the polyolefin composition) of at least one polypropylene homopolymer,
   and optionally further additives, wherein the sum of all ingredients adds always up to 100 wt%,

   wherein the polyolefin composition is **characterized by**

   - a puncture energy of at least 8.0 J (ISO 6603-2), and
   - an impact strength (ISO179-1, Charpy 1eA +23°C) of at least 9.5 kJ/m$^2$.

2. Polyolefin composition according to claim 1, **characterized in that** the polyolefin composition is essentially free of any (virgin) heterophasic propylene copolymer, essentially free of any (virgin) polypropylene block copolymer and/or essentially free of talc.

3. Polyolefin composition according to claim 1 or 2, **characterized in that** it comprises

   a) 30-40 wt% (based on the overall weight of the polyolefin composition) of the mixed-plastics polypropylene blend of recycled material;
   b) 20-40 wt% (based on the overall weight of the polyolefin composition) of glass fibers;
   c) 10-20 wt% (based on the overall weight of the polyolefin composition) of at least one elastomer,
   d) 0-40 wt% (based on the overall weight of the polyolefin composition) of at least one polypropylene homopolymer,

   and optionally further additives, wherein the sum of all ingredients adds always up to 100 wt%.

4. Polyolefin composition according to one of the preceding claims, **characterized by** a puncture energy of at least 9.0 J, preferably of at least 10.0 J, more preferably of at least 14.0 J, in particular in a range between 8.0 and 25.0 J, more in particular in a range between 10.0 and 20.0 J, even more particular in a range between 14.0 and 18.0 J.

5. Polyolefin composition according to one of the preceding claims, **characterized by** an impact strength (ISO179-1,

Charpy 1eA +23°C) of at least 12.0 kJ/m$^2$, preferably of at least 16.0 kJ/m$^2$, in particular in a range between 9.5 and 35.0 kJ/m$^2$, more in particular in a range between 12.0 and 30.0 kJ/m$^2$, even more particular in a range between 16.0 and 25.0 kJ/m$^2$.

6.  Polyolefin composition according to one of the preceding claims, **characterized by** a melt flow rate MFR$_2$ (ISO 1133, 2.16 kg, 230°C) of at least 2.0 g/ 10 min, preferably at least 4.0 g/10 min, more preferably at least 4.5 g/10 min, even more preferably at least 5.0 g/ 10 min, in particular in the range between 2.0 and 12.0 g/10 min, preferably between 3.0 and 10.0 g/10min, more preferably between 4.0 and 7.0 g/10 min, even more preferably between 4.5 and 6.5 g/10min.,

7.  Polyolefin composition according to one of the preceding claims **characterized by** a tensile modulus (ISO 527-2) of at least 3500 MPa, preferably of at least 4500 MPa, more preferably of at least 5000 MPa, in particular in a range between 3500 and 8000 MPa, more in particular in a range between 4500 and 7000 MPa.

8.  Polyolefin composition according to one of the preceding claims, **characterized in that** it comprises

    a) 30-40 wt% (based on the overall weight of the polyolefin composition) of the mixed-plastics polypropylene blend of recycled material;
    b) 20-40 wt% (based on the overall weight of the polyolefin composition) of glass fibers;
    c) 10-20 wt% (based on the overall weight of the polyolefin composition) of at least one elastomer,
    d) 5-35 wt%, preferably 15-25 wt% (based on the overall weight of the polyolefin composition) of at least one polypropylene homopolymer,
    and optionally further additives, wherein the sum of all ingredients adds always up to 100 wt%, and wherein the composition is essentially free of any (virgin) polypropylene block copolymer.

9.  Polyolefin composition according to one of the preceding claims, **characterized in that** it comprises

    a) 30-50 wt%, preferably 35 - 45 wt% (based on the overall weight of the polyolefin composition) of the mixed-plastics polypropylene blend of recycled material;
    b) 30-50 wt%, preferably 35-45 wt% (based on the overall weight of the polyolefin composition) of glass fibers;
    c) 10-20 wt% (based on the overall weight of the polyolefin composition) of at least one elastomer,
    and optionally further additives, wherein the sum of all ingredients adds always up to 100 wt%.
    wherein the composition is free of any talc.

10.  Polyolefin composition according to one of the preceding claims, **characterized in that** the at least one polypropylene homopolymer comprises

    - a polypropylene homopolymer (PPH-1) having a melt flow rate MFR$_2$ (230°C, 2.16 kg, measured according to ISO 1133) in the range of 10 to 30 g/10min, preferably of 15 to 25 g/10min, more preferably of 19 to 21 g/10 min, and/or
    - a polypropylene homopolymer (PPH-2) having a melt flow rate MFR$_2$ (230°C, 2.16 kg, measured according to ISO 1133) in the range of 5 to 15 g/10 min, preferably of 5 to 10 g/10min, more preferably of 7.5 to 8.5 g/10 min.

11.  Polyolefin composition according to one of the preceding claims **characterized in that** the mixed-plastics polypropylene blend (Blend A1) has

    (i) a crystalline fraction (CF) content determined according to CRYSTEX QC analysis in the range from 86.0 to 94.0 wt%, more preferably 90.0 to 94.0 wt.%, and
    (ii) a soluble fraction (SF) content determined according to CRYSTEX QC analysis in the range from 6.0 to 14.0 wt%, more preferably 6.0 to 10.0 wt%, whereby
    (iii) said crystalline fraction (CF) has a propylene content (C3(CF)) as determined by FT-IR spectroscopy calibrated by quantitative $^{13}$C-NMR spectroscopy, in the range from 93.0 - 99.0 wt%, preferably from 95.0 to 98.0 wt.%; and whereby
    (iv) said crystalline fraction (CF) has an ethylene content (C2(CF)), as determined by FT-IR spectroscopy calibrated by quantitative $^{13}$C-NMR spectroscopy, in the range from 1 to 7 wt%; more preferably 2.0 to 5.0 wt%, even more preferably 2.5 to 3.5 wt%; and
    (v) said soluble fraction (SF) has an intrinsic viscosity (iV(SF)) in the range from 1.2 to below 1.8 dl/g, preferably 1.40 to 1.70 dl/g;
    whereby

(vi) the mixed-plastics polypropylene blend has a CIELAB color space (L*a*b*) of

- L* from 40 to 85, preferably from 50 to 75;
- a* from -8.00 to 10, more preferably -5.0 to 0.0;
- b* from 0.0 to below 10.0, more preferably 0.0 to below 5.00.

12. Polyolefin composition according to one of the preceding claims **characterized in that** the at least one elastomer is an ethylene/propylene copolymer that is selected from ethylene / propylene copolymers with different C2/C3 ratio (C2/C3 or C3/C2 elastomers), ethylene/butene copolymers (C2/C4 elastomers), ethylene/octene copolymers (C2/C8 elastomers) grafted ethylene elastomers (such as MAH grafted ethylene elastomer) or C2/C3 and C2/C4 block copolymers, in particular an ethylene based 1-octene elastomer.

13. Polyolefin composition according to one of the preceding claims **characterized in that** the glass fibers added have a length of 2.0 to 10.0 mm, preferably in the range of 2.0 to 8.0 mm, even more preferably in the range of 2.0 to 6.0 mm and a diameter of from 5 to 20 $\mu$m, more preferably from 8 to 18 $\mu$m, still more preferably 8 to 15 $\mu$m.

14. Polyolefin composition according to one of the preceding claims **characterized in that** it comprises at least one coupling agent, in particular a polypropylene functionalized with maleic anhydride (MAH), and/or at least one dosing agent.

15. An article comprising the polyolefin composition according to one of the preceding claims.

**EUROPEAN SEARCH REPORT**

Application Number

EP 23 21 0984

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 194 502 A1 (BOREALIS AG [AT]) 14 June 2023 (2023-06-14) * the whole document * ----- | 1-15 | INV. C08L23/10 |

TECHNICAL FIELDS
SEARCHED      (IPC)

C08L

The present search report has been drawn up for all claims

| Place of search | Date of completion of the search | Examiner |
|---|---|---|
| Munich | 12 April 2024 | Rouault, Yannick |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

## ANNEX TO THE EUROPEAN SEARCH REPORT
## ON EUROPEAN PATENT APPLICATION NO.

**EP 23 21 0984**

This annex lists the patent family members relating to the patent documents cited in the above-mentioned European search report.
The members are as contained in the European Patent Office EDP file on
The European Patent Office is in no way liable for these particulars which are merely given for the purpose of information.

**12-04-2024**

| Patent document cited in search report | Publication date | Patent family member(s) | | Publication date |
|---|---|---|---|---|
| EP  4194502       A1 | 14-06-2023 | EP | 4194502 A1 | 14-06-2023 |
| | | WO | 2023110745 A1 | 22-06-2023 |

EPO FORM P0459

For more details about this annex : see Official Journal of the European Patent Office, No. 12/82

## REFERENCES CITED IN THE DESCRIPTION

**Patent documents cited in the description**

- WO 2014167493 A1
- EP 2845876 B1
- EP 3406662 A1
- WO 2018086959 A1
- WO 2019198037 A1
- WO 03031174 A2

**Non-patent literature cited in the description**

- **DEMETS, RUBEN et al.** Development and application of an analytical method to quantify odour removal in plastic waste recycling processes. *Resources, Conservation and Recycling*, 2020, vol. 161, 104907
- *CHEMICAL ABSTRACTS*, 6683-19-8
- *CHEMICAL ABSTRACTS*, 31570-04-4
- *CHEMICAL ABSTRACTS*, 693- 36-7
- *CHEMICAL ABSTRACTS*, 11097-59-9
- *CHEMICAL ABSTRACTS*, 1592-23-0
- *CHEMICAL ABSTRACTS*, 557-05-1
- *CHEMICAL ABSTRACTS*, 60676-86-0
- *CHEMICAL ABSTRACTS*, 7631-86-9
- *CHEMICAL ABSTRACTS*, 112926-00-8
- *CHEMICAL ABSTRACTS*, 1318-74-7
- *CHEMICAL ABSTRACTS*, 1344-00-9
- *CHEMICAL ABSTRACTS*, 92704-41-1
- *CHEMICAL ABSTRACTS*, 1327-36-2
- *CHEMICAL ABSTRACTS*, 1344-95-2
- *CHEMICAL ABSTRACTS*, 1344-01-0
- *CHEMICAL ABSTRACTS*, 52829-07-9
- *CHEMICAL ABSTRACTS*, 1843-05-6
- *CHEMICAL ABSTRACTS*, 532-32-1
- *CHEMICAL ABSTRACTS*, 135861-56-2
- *CHEMICAL ABSTRACTS*, 97593-29-8
- *CHEMICAL ABSTRACTS*, 71786-60-2
- *CHEMICAL ABSTRACTS*, 61791-31-9
- *CHEMICAL ABSTRACTS*, 204-393-1
- **LJILJANA JEREMIC** ; **ANDREAS ALBRECHT** ; **MARTINA SANDHOLZER** ; **MARKUS GAHLEITNER**. Rapid characterization of high-impact ethylene-propylene copolymer composition by crystallization extraction separation: comparability to standard separation methods. *International Journal of Polymer Analysis and Characterization*, 2020, vol. 25 (8), 581-596
- *CHEMICAL ABSTRACTS*, 128-37-0
- **G. SINGH** ; **A. KOTHARI** ; **V. GUPTA**. *Polymer Testing*, 2009, vol. 28 (5), 475
- **Z. ZHOU** ; **R. KUEMMERLE** ; **X. QIU** ; **D. REDWINE** ; **R. CONG** ; **A. TAHA** ; **D. BAUGH** ; **B. WINNIFORD**. *J. Mag. Reson.*, 2007, vol. 187, 225
- **V. BUSICO** ; **P. CARBONNIERE** ; **R. CIPULLO** ; **C. PELLECCHIA** ; **J. SEVERN** ; **G. TALARICO**. *Macromol. Rapid Commun.*, 2007, vol. 28, 1128
- **CHENG, H. N.** *Macromolecules*, 1984, vol. 17, 1950
- **W-J. WANG** ; **S. ZHU**. *Macromolecules*, 2000, vol. 33, 1157
- **HEINO, E.L.** ; **LEHTINEN, A.** ; **TANNER J.** ; **SEPPÄLÄ, J.** Rheological characterization of polyethylene fractions. *Theor. Appl. Rheol., Proc. Int. Congr. Rheol, 11th*, 1992, vol. 1, 360-362
- **HEINO, E.L.** The influence of molecular structure on some rheological properties of polyethylene. *Annual Transactions of the Nordic Rheology Society*, 1995
- Definition of terms relating to the non-ultimate mechanical properties of polymers. *Pure & Appl. Chem.*, 1998, vol. 70 (3), 701-754
- **J. M. DEALY** ; **K. F. WISSBRUN**. Melt Rheology and Its Role in Plastics Processing: Theory and Applications. Van Nostrand Reinhold, 1990
- **S. FILIPE**. Non-Linear Rheology of Polymer Melts. *AIP Conference Proceedings*, 2009, vol. 1152, 168-174
- **M. WILHELM**. *Macromol. Mat. Eng.*, 2002, vol. 287, 83-105
- **S. FILIPE** ; **K. HOFSTADLER** ; **K. KLIMKE** ; **A. T. TRAN**. Non-Linear Rheological Parameters for Characterisation of Molecular Structural Properties in Polyolefins. *Proceedings of Annual European Rheology Conference*, 2010, vol. 135
- **S. FILIPE** ; **K. KLIMKE** ; **A. T. TRAN** ; **J. REUSSNER**. Proceedings of Novel Non-Linear Rheological Parameters for Molecular Structural Characterisation of Polyolefins. *Novel Trends in Rheology IV, Zlin, Check Republik*, 2011
- **K. KLIMKE** ; **S. FILIPE** ; **A. T. TRAN**. Non-linear rheological parameters for characterization of molecular structural properties in polyolefins. *Proceedings of European Polymer Conference, Granada, Spain*, 2011